Europäisches Patentamt

European Patent Office

Office européen des brevets

(11) Numéro de publication: **0 304 348 B1**

(12) **FASCICULE DE BREVET EUROPEEN**

(19)

(45) Date de publication de fascicule du brevet: **27.10.93** (51) Int. Cl.⁵: **G06F 12/14**, G06F 12/02

(21) Numéro de dépôt: **88401820.1**

(22) Date de dépôt: **12.07.88**

(54) **Moyens de verrouillage d'accès pour unité de gestion d'accès en mémoire, et gestion de conflits d'accès utilisant de tels moyens de verrouillage.**

(30) Priorité: **15.07.87 FR 8709970**
**27.04.88 FR 8805631**

(43) Date de publication de la demande:
**22.02.89 Bulletin 89/08**

(45) Mention de la délivrance du brevet:
**27.10.93 Bulletin 93/43**

(84) Etats contractants désignés:
**DE FR GB IT NL**

(56) Documents cités:
**US-A- 3 683 418**
**US-A- 3 706 077**
**US-A- 3 839 706**

(73) Titulaire: **CENTRE NATIONAL DE LA RECHER-**
**CHE SCIENTIFIOUE (CNRS)**
**15, Ouai Anatole France**
**F-75700 Paris Cedex 07(FR)**

Titulaire: **INSTITUT NATIONAL DE RECHER-**
**CHE EN INFORMATIOUE ET EN AUTOMATI-**
**OUE**
**Domaine de Voluceau**
**Rocquencourt**
**B.P. 105**

**F-78153 Le ChesnayCédex(FR)**

(72) Inventeur: **Faudemay, Pascal**
**34 rue du Laos**
**F-75015 Paris(FR)**
Inventeur: **Gardarin, Georges**
**6 avenue du Panorama**
**F-94230 Cachan(FR)**
Inventeur: **Pucheral, Philippe**
**3 Square J.P. Martinez**
**F-94000 Creteil(FR)**
Inventeur: **Thevenin, Jean-Marc**
**60 rue Champ Lagarde**
**F-78000 Versailles(FR)**

(74) Mandataire: **Rodhain, Claude et al**
**Cabinet Claude Rodhain**
**30, rue la Boétie**
**F-75008 Paris (FR)**

EP 0 304 348 B1

**Description**

Le domaine de l'invention est celui des unités de gestion d'accès en mémoire, du type destinées à être interposées entre l'unité centrale et les unités de mémorisation d'un ordinateur, notamment pour la gestion de bases de données.

Une MMU ("Mémory Management Unit" : Unité de gestion mémoire UGM, ou encore mémoire-cache) est un circuit qui fait correspondre une adresse physique à une adresse logique dans une architecture de mémoire virtuelle.

De façon plus spécifique, le domaine de l'invention est celui des moyens de verrouillage d'accès aux objets stockés dans les unités de mémorisation. L'invention se propose de fournir une solution aux conflits d'accès susceptibles d'intervenir entre plusieurs utilisateurs. De tels conflits d'accès se produisent par exemple pour des objets, typiquement des tuples d'une même relation d'une base de données, accédés concurremment par plusieurs utilisateurs.

Plus précisément, l'invention concerne des structures avantageuses de verrous d'accès, des procédures nouvelles d'accès aux verrous, et des procédures nouvelles de gestion des conflits d'accès aux objets verrouillés.

On connaît déjà le principe de verrouillage deux phases, tel qu'il a notamment été présenté par ESWARAN en 1976 (ESWARAN KP, GRAY J.N., LORIE R., TRAIGER L.L : "The notion of consistency and predicate looks in a data base system" Communications of ACM, vol-19, n°11, Nov. 1976, pages 624-633). Il s'agit d'un protocole distinguant deux phases de verrouillage pour un objet donné : la pose de verrous sur l'objet par des transactions accédant l'objet, et le retrait des verrous. De façon connue, on distingue également deux types de verrous :

- les verrous partageables, dits "verrous en lecture", qui sont constitués généralement par 1 bit/transaction. Par définition, ces verrous permettent plusieurs accès concurrents en lecture par des transactions différentes ;
- les verrous exclusifs, dits "verrous en écriture". Ces verrous comprennent généralement une estampille d'identification de la transaction verrouillante. Par définition, seule la transaction qui a posé le verrou en écriture est autorisée à accéder à l'objet ; les autres transactions demanderesses doivent être mises en attente du retrait de verrou.

Dans ce type de verrouillage connu, de façon classique, on garde la trace dans le verrou de chaque transaction qui a verrouillé en lecture. Ceci a été jusqu'à présent nécessaire, notamment pour faire face à la situation suivante : dans le cas d'une transaction désireuse de poser un verrou en écriture sur un objet déjà verrouillé en lecture, il est nécessaire de vérifier qui est à l'origine du ou des verrou(s) en lecture : en effet, l'écriture ne sera autorisée pour la transaction courante que si elle est seule à avoir verrouillé l'objet en lecture ; dans le cas où au moins une autre transaction a posé un verrou en lecture, la transaction courante devra attendre le retrait de ce verrou en lecture pour accéder en écriture à l'objet.

Cette procédure de conservation de la trace des transactions verrouillant en lecture, et de mise en attente des transactions demanderesses ultérieures, est contraignante : elle mobilise le système d'exploitation de la machine hôte, et consomme des ressources importantes pour mémoriser, au niveau des verrous, l'identification des transactions qui ont verrouillé en lecture.

On connaît également d'autres procédures de gestion de concurrence, telles que l'estampillage ou la certification. Ces procédures sont néanmoins moins employées que le verrouillage deux-phases.

L'estampillage consiste à utiliser une estampille par granule (un granule est une unité de verrouillage : par exemple un objet, une page d'objet, ou une relation). Les transactions successives sont ordonnancées par affectation d'estampilles de valeurs croissantes.

La certification présente pour sa part l'inconvénient de conduire à l'abandon de transactions proches de leur fin d'exécution. De plus, la certification présente un coût de traitement croissant avec le degré de concurrence, alors que le verrouillage deux-phases correspond à un coût forfaitaire de pose et de test de verrou.

Ces deux techniques présentent l'inconvénient qu'elles ne permettent pas de combiner la mise à jour en place et la gestion d'espaces de travail propres à chaque transaction, ce qui fait appel à un type particulier de verrous dits "verrous en masquage".

L'objectif de l'invention est de pallier les limites de procédures de gestion de conflits existantes, y compris les inconvénients du verrouillage deux-phases classique.

Plus précisément, un premier objectif de l'invention est de fournir des moyens de verrouillage et de gestion de conflits d'accès, basés sur le principe du verrouillage deux-phases, mais permettant la gestion d'un nombre très élevé, voire illimité, de transactions simultanées.

Un objectif complémentaire de l'invention est d'autoriser une gestion de la concurrence au niveau de l'objet, c'est à dire au plus bas niveau de granule.

Un autre objectif de l'invention est de résoudre le problème d'attente des transactions, en limitant les appels au système d'exploitation de la machine hôte qui constituent un facteur de ralentissement important des SGBD (Système de Gestion de Bases de Données).

L'invention a également pour objectif d'être compatible avec des unités de gestion d'accès en mémoire du type à hiérarchies de tables, comme par exemple les UGM décrites dans les deux demandes de brevets françaises prioritaires qui sont incorporées à la présente demande de brevet par référence.

Ces objectifs, ainsi que d'autres qui apparaîtront par la suite sont atteints à l'aide de moyens de verrouillage d'accès à des objets stockés dans l'unité de mémorisation d'un ordinateur, lesdits objets étant adressés à travers une unité de gestion d'accès en mémoire du type comprenant des moyens d'adressage indirects délivrant une information d'adressage physique d'objets à partir d'une adresse logique source provenant de l'unité de traitement de l'ordinateur.

Des moyens de verrouillage d'accès à des objets stockés dans l'unité de mémorisation d'un ordinateur sont connus des brevets US-A-3839706 (BORCHSENIUS) et US-A-3683418 (MARTIN).

Plus particulièrement, le brevet US-A-3839706 (BORCHSENIUS) divulgue un procédé d'utilisation d'une unité de gestion, pour la gestion de conflit de la demande d'accès à un même objet provenant d'au moins une autre transaction différente, procédé selon lequel :
- on initialise tous les verrous associés aux objets accédés ;
- on incrémente l'information spécifique de verrouillage de chaque objet, pour chaque demande d'accès audit objet provenant d'une transaction quelconque ;
- à chaque fin d'un accès en cours, on décrémente l'information spécifique de verrouillage de chaque objet.

Cette antériorité, ne permet pas le verrouillage d'un objet pendant plusieurs accès d'une seule transaction. Cet inconvénient est évité grâce au procédé mentionné dans la revendication 1.

Selon une variante particulièrement avantageuse, le procédé selon l'invention est caractérisé en ce que dans le cas d'une demande de verrouillage en écriture formulée par une opération d'une transaction T1, sur un objet, ou une version d'objets verrouillé(s) en lecture :
- on positionne, le cas échéant, le bit de famine de l'information spécifique de verrouillage dudit objet, de façon à éviter qu'une transaction lectrice ultérieure n'accède audit objet,
- on stocke ledit objet, ou son identifiant, dans une relation temporaire de conflit possible associée à ladite transaction,
- à la fin de ladite opération, on recopie le champ compteur de l'information spécifique de verrouillage, de chacun desdits objets stockés dans ladite relation temporaire de conflit,
- on décrémente lesdites copies de compteur du nombre d'occurrences desdits objets correspondants dans la ou les relation(s) résultat(s) associés à ladite transaction,
- on constate un conflit et on annule ladite opération, au moins pour lesdits objets en conflit d'accès, lorsque le résultat de la décrémentation est différent de zéro, c'est-à-dire lorsqu'au moins une autre transaction non encore achevée a obtenu l'accès audit objet,
- on constate l'absence de conflit lorsque le résultat de la décrémentation est égal à zéro.

Selon un autre aspect de l'invention, le procédé selon l'invention est caractérisé en ce que, dans le but de gérer la mise en attente des transactions, une opération est divisée en une ou plusieurs sous-opérations indépendantes ;

une sous-opération d'une transaction est effectuée sans être interrompue par une sous-opération d'une autre transaction ;
- on recherche les conflits certains dues à un verrou exclusif d'une autre transaction en cours de sous-opération et les conflits possibles dûs à un champ compteur non nul en fin de sous-opération,
- en cas de conflit sur certains objets la sous-opération se trouve partiellement abandonnée sur ces objets du seul fait que deux adresses logiques ne sont conservées que dans la relation temporaire de mémorisation des conflits de la sous-opération et qu'ils ne font pas l'objet de verrous ;
- la transaction est alors mise en attente par simple retrait de la liste des transactions en cours d'exécution.

D'autres caractéristiques et avantages de l'invention apparaîtront à la lecture de la description suivante d'un mode de réalisation préférentiel donné à titre illustratif, et des dessins annexés dans lesquels :
- la figure 1 est un schéma bloc illustrant un premier mode de réalisation préférentiel d'une unité de gestion d'accès en mémoire dans laquelle est mise en oeuvre l'invention ;
- la figure 2 est un schéma illustrant les différentes phases de fonctionnement de l'unité de gestion de la figure 1;

3

- les figures 3a, 3b, 3c illustrent quelques aspects du système de gestion de conflit d'accès par verrous, selon l'invention, appliqués audit premier mode de réalisation de l'unité de gestion de la figure 1.
- la figure 4 schématise la structure à deux étages d'adressage d'un second mode de réalisation d'une unité de gestion d'accès en mémoire dans laquelle est mise en oeuvre l'invention,
- la figure 5 schématise les relations d'adressage et de pointage hiérarchique entre les ensembles de tables de l'unité de gestion de la figure 4, dans le cas d'un mode de réalisation avec gestion de verrous de versions d'objets,
- la figure 6 illustre les relations d'adressage et de pointage hiérarchique entre les ensembles de tables de l'unité de la figure 4, dans le cas d'une gestion de concurrence d'accès (cas sans versions d'objets),
- la figure 7 représente la même chose que la figure 6 mais dans un cas avec versions d'objets,
- la figure 8 est un schéma complet d'implantation d'un mode de réalisation avantageux de l'unité de gestion d'accès en mémoire de l'invention, supportant des verrous d'accès.
- la figure 9 est un schéma complet d'implantation d'un second mode de réalisation avantageux de l'unité de gestion d'accès en mémoire de l'invention, supportant des versions d'objets.

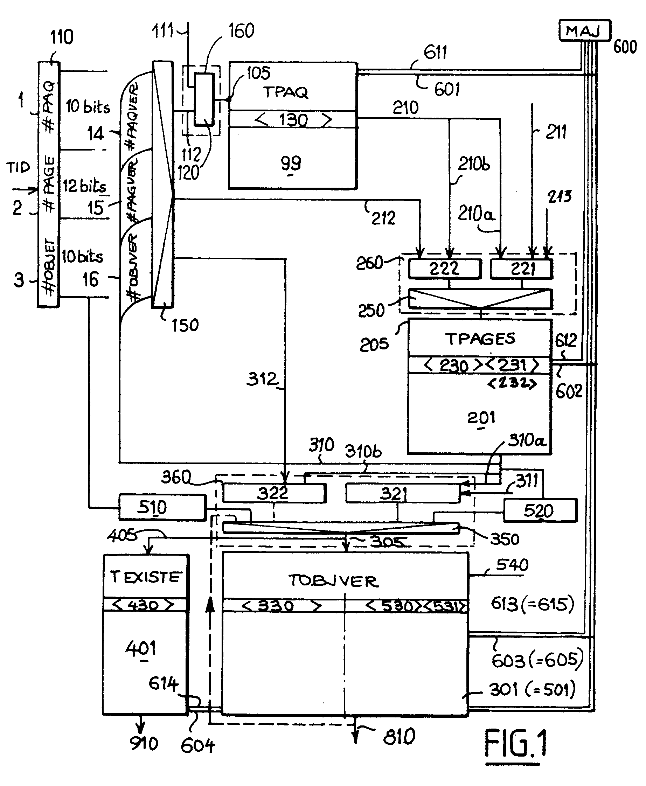

L'unité de gestion représentée en figure 1 est un mode de réalisation adapté à une base de données conçue pour une grande mémoire.

Elle joue le rôle à la fois d'une unité de gestion de mémoire, et d'une mémoire cache pour les tables de correspondance entre l'adresse logique source et l'adresse physique résultat.

Plus exactement, l'unité de gestion selon l'invention assure la correspondance entre les adresses logiques et physiques de la totalité d'une base de données montée en mémoire pour une session, ou de la partie la plus utilisée de cette base; elle assure également l'accès aux verrous ; celle-ci peut représenter entre plusieurs dizaines et plusieurs centaines de relations. Dans certains cas l'unité selon l'invention peut ne contenir que les tables d'accès à une ou deux très grandes relations, appelées en mémoire pour une requête. En raison du volume des données référencées, le volume des tables n'est pas négligeable et celles-ci sont rangées dans des mémoires qui constituent une forme de cache pour l'opération de correspondance. Celle-ci est effectuée par une suite d'adressage indirectes (indirections), qui permettant une correspondance relativement rapide sans utiliser de mémoire associative.

Dans l'environnement considéré pour le mode de réalisation préférentiel présenté ici, les adresses logiques des objets de la base (tuples, attributs, ensembles...) sont des identifiants d'objets ou TIDs (pour "tuple identifiers") de la forme ⟨numéro de paquet⟩ ⟨numéro de page⟩ ⟨numéro d'objet⟩.

L'unité de gestion mémoire selon l'invention est principalement constituée de 5 ensembles de tables, qui peuvent éventuellement être réduites à 4 comme représenté sur la figure 1

- TPAQ (99) contient les tables des paquets
- TPAGES (201) contient les tables des pages
- TOBJ (301) délivre un déplacement dans la page, par exemple sur 16 bits, ou une adresse d'objet, par exemple sur 32 bits
- TEXISTE (401) délivre une valeur sur un mot-mémoire, par exemple sur 32 bits. Cette largeur de résultat est nécessaire pour une initialisation rapide des bits de ses tables. A l'intérieur de ce mot-mémoire, le bit correspondant à l'objet courant est sélectionné, normalement par matériel dans le cache/MMU de l'invention.
- TVERROUS 501 délivre un verrou ou une adresse physique sur 32 bits.

De façon avantageuse, cet ensemble de tables peut être divisé en deux zones de même taille : une première zone VERROUS 530 contenant des ensembles de verrous, et une seconde zone MIROIR 531 contenant des copies de verrous ou des adresses de ces copies ; dans ce cas, la sélection entre les deux zones VERROUS 530 et MIROIR 531 est effectuée par un fil d'adresses MIROIR 540.

Dans un autre mode de réalisation, la zone MIROIR 531 est un sous-ensemble de la zone VERROUS 530, et son adressage se fait à partir d'une troisième information secondaire d'adressage 232 prévue dans la table des pages.

Les ensembles de tables TOBJ 301 et TVERROUS 501 sont ici regroupés en un seul TOBJVER 301. Dans ce cas un espace mémoire égal à TOBJ est perdu du fait de l'existence du fil __ MIROIR 540, mais le nombre de composants peut éventuellement être réduit.

Dans cette structure, le numéro de paquet 112 de l'adresse logique source 10 peut être alloué séquentiellement ou résulter d'un hachage multi-attributs statique. Il constitue l'indice dans la table des paquets 99 de la relation courante d'une information secondaire d'adressage 130 correspondant à l'adresse de la table des pages associée à un paquet.

4

Le numéro de page 212 est l'indice dans cette table des pages d'une information secondaire d'adressage 230 correspondant à une adresse de la table des objets TOBJ associée à la page, et le cas échéant d'un élément 231 formé d'une adresse de tuple de la relation__VERROUS, ainsi éventuellement que d'une adresse de copie de tuples.

Le numéro de tuple 312 constitue l'indice d'une information secondaire d'adressage 330 correspondant à une adresse de tuple ou d'un déplacement dans sa page, dans la table TOBJ 301, et le cas échéant d'un bit d'existence de verrou dans un attribut __ VERROUS.EXISTE de type ensemble de bits dans la banque mémoire EXISTE 401, et d'un verrou 530 dans un attribut __ VERROUS.VERROU de type ensemble de verrous (ceux-ci sont définis plus loin).

Toutes ces adresses de table ou de tuple, sauf la dernière sont soit des adresses physiques, soit des TIDs. Si on rencontre une adresse logique dans la recherche de l'adresse de tuple __ VERROUS, cette adresse logique est convertie récursivement en adresse physique. Il n'y a pas de verrous sur la relation __ VERROUS. Dans les autres cas cela implique un défaut de page.

Un élément de la table des pages 201 dans le cache est formé d'un enregistrement de longueur fixe comportant deux informations secondaires d'adressage sous la forme ⟨adresse de tuple de __ VERROUS 231⟩ ⟨adresse de table des objets 230⟩. Normalement ces deux résultats sont délivrés simultanément par TPAGES.

Les circuits additionneurs 221, 222 peuvent le cas échéant coopérer avec un circuit multiplexeur 250.

D'autre part, l'information secondaire d'adressage 231 (adresse de verrou), et éventuellement l'information secondaire d'adressage 232 (adresse de copie de verrou) peuvent être délivrées en sortie de la banque mémoire TPAGES par commande d'un déplacement d'adresse correspondant dans TPAGES fournie par une ou deux pistes d'entrée 213.

L'organisation du MMU présentée jusqu'ici assure la gestion de conflits d'accès d'un même objet par plusieurs transactions différentes.

Une situation de conflit apparaît notamment lorsqu'une seconde transaction demande à effectuer une lecture sur un objet, alors qu'une première transaction a effectué une lecture de cet objet en vue d'une opération d'écriture. En conséquence, la gestion de conflit consiste d'abord à identifier la nature de l'opération (lecture ou écriture) effectuée par la transaction à chaque accès à une donnée. Il s'agit également d'assurer une vérification systématique de toutes les transactions demandant à accéder à une donnée qui a subi une opération d'écriture :

Deux situations doivent être envisagées dans le cas d'une écriture : la suppression d'un objet de la relation source, et l'insertion d'un objet dans cette relation source.

Dans le cas d'une insertion, seule sera autorisée à l'accès la transaction courante ayant effectué l'opération d'écriture, le verrou posé correspondant à un verrou de masquage. Ceci signifie que les autres transactions se poursuivent en ignorant l'objet masqué.

Dans le cas d'une suppression, la transaction courante ayant effectué la suppression n'accède plus à l'objet supprimé.

Selon l'invention, le système de gestion de conflits est à base de verrous, formés d'informations spécifiques de verrouillage associées à chaque objet accédé.

Ces verrous subissent les opérations suivantes :

- ils sont initialisés lors du premier accès à un objet ne possédant pas de verrou faisant partie du résultat d'une opération ;
- ils comportent des compteurs qui sont incrémentés à chaque demande d'accès par une transaction quelconque;
- ces compteurs sont décrémentés lors de chaque fin de transaction, de la valeur correspondant au nombre d'accès demandé par ladite transaction.

Cette dernière caractéristique suppose que chaque transaction stocke pour son compte le nombre d'accès qu'elle a demandé, dans une copie de verrous associée à chaque objet du fichier ou de la relation résultat. Ce stockage résulte en général de la conservation des identifiants des objets verrouillés dans des relations intermédiaires de résultat des opérations.

La résolution des conflits est effectuée en prévoyant une copie du verrou, associée à chaque objet dans un fichier (ou une relation) source. A l'occurrence d'un conflit, on soustrait de l'information de verrouillage de l'objet en demande d'accès, dans la copie de verrou de l'objet de la relation source, le nombre mémorisé dans la relation résultat pour l'accès audit objet pour la transaction courante.

Lorsque le résultat de l'opération de soustraction est différent de 0, c'est à dire lorsqu'au moins une autre transaction non encore achevée a également obtenu l'accès audit objet, on verrouille l'accès audit objet pour la transaction courante.

5

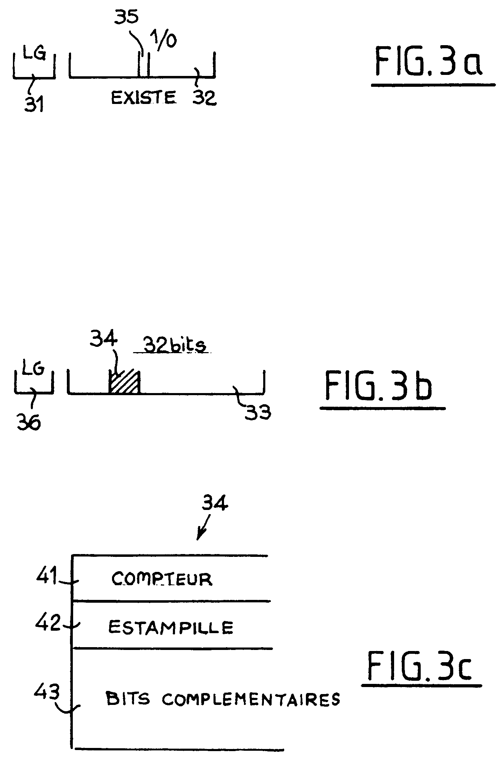

Dans le mode de réalisation représenté en figure 3a, chaque verrou est constitué par un tuple__VERROUS, dans une relation spécifique (ensemble de tables de verrou 501), et par un tuple__EXISTE dans une autre relation (ensembles de tables de marquage 401).

La structure du tuple__EXISTE est constituée par un champ 31 de longueur de tuple, et un attribut 32 de type "ensemble" dont la longueur correspond à l'information dans le champ 31.

La structure du tuple__VERROU est symétrique, et comprend un champ 36 de longueur de tuple, suivi d'un attribut 33 également de type "ensemble". L'attribut 33 comporte une succession de verrous 34, sur 32 bits, correspondant par exemple chacun à une information spécifique de verrouillage sur un objet dans une page. Dans ce cas, qui est celui du mode de réalisation présenté dans les dessins, l'ensemble 33 fournit une information de verrouillage pour une page complète.

Pour chaque verrou 34 de l'attribut 33 du tuple VERROU, l'attribut 32 comporte un bit 35 exprimant si le verrou 34 a une valeur significative, ou est non définie.

Chaque information de verrouillage 34 présente avantageusement la structure schématisée en figure 3c. Ainsi, pour chaque objet, l'information de verrouillage comporte un compteur 41, une zone d'estampillage 42, et une zone de bits complémentaires 43.

Comme déjà mentionné, la valeur du compteur est incrémentée d'une unité chaque fois que le tuple est accédé en lecture, et décrémenté, à chaque fin de transaction, du nombre d'accès demandés par la transaction achevée.

Lorsqu'une seule transaction a verrouillé en lecture, l'estampille de cette transaction est en plus rangée dans la partie "estampille" 42 du verrou 34. Cette estampille est supprimée en cas de verrouillage par d'autres transactions.

En cas de conflit avec un verrouillage en lecture par une transaction inconnue, le système doit vérifier si le verrouillage provient de la transaction qui demande le verrou en écriture (absence de conflit) ou d'une autre transaction. Pour cela il copie le verrou et décrémente la copie pour chaque TID qui la référence dans les relations temporaires de la transaction.

L'adresse du tuple verrou 231 peut être soit une adresse physique, soit une adresse logique (TID). Bien que la carte de cache/MMU puisse être réalisée avec l'une ou l'autre des deux solutions, l'emploi d'une adresse logique donne plus de souplesse au système. Dans le cas où il s'agit d'une adresse logique, elle est décomposée en trois éléments (numéro de paquet 40, de page 50 et de tuple 60 dans la relation __ VERROUS 501) multiplexés avec les entrées correspondant aux numéros de paquet 1, de page 2 et d'objet 3 ; au cycle suivant ces trois éléments sont utilisés à la place des valeurs initiales de ces entrées. Il peut s'agir aussi d'une adresse physique. Dans ce cas elle est utilisée pour accéder les attributs du tuple verrou dans TEXISTE 401 et TVERROUS 501; si TVERROUS 501 et TOBJ 301 sont remplacés par TOBJVER 301, elle est transmise comme composante de l'adresse de TOBJVER au cycle suivant, le premier servant à l'accès à la table TOBJ.

Dans la solution utilisant une zone miroir, l'adressage du mot courant de TEXISTE 401 et de TVERROUS 501 (si ce dernier existe) s'effectue de manière identique, mis à part l'existence du signal __ MIROIR qui est positionné en début d'opération. Dans l'autre solution, l'adresse de début de la copie se trouve dans TPAGES et est augmentée du n° d'objet dans la page pour accéder à TEXISTE et à TVERROU. En cas de détection de conflits, l'opération de décrémentation des verrous est une opération de recherche distincte de l'opération au cours de laquelle ont été détecté des conflits; le registre décrivant le mode d'opération du cache MMU est réécrit avec de nouvelles valeurs. Dans le mot courant de EXISTE, le numéro de tuple détermine aussi le bit courant. Les informations EXISTE et VERROU peuvent aussi être réécrites dans le cache/MMU à l'issue de la sélection, après modification par le processeur.

L'unité de gestion mémoire de l'invention supporte donc le verrouillage, éventuellement le test des verrous, le retrait des verrous sur les copies, ainsi que le retrait des verrous en fin de transaction. Il permet également une bonne gestion d'espaces de travail, par la pose de "verrous en masquage" des tuples supprimés ou insérés. Le fait que cette possibilité soit offerte n'exclut nullement l'utilisation effective d'une autre méthode de gestion de concurrence, comme la certification, ou l'absence de gestion de concurrence.

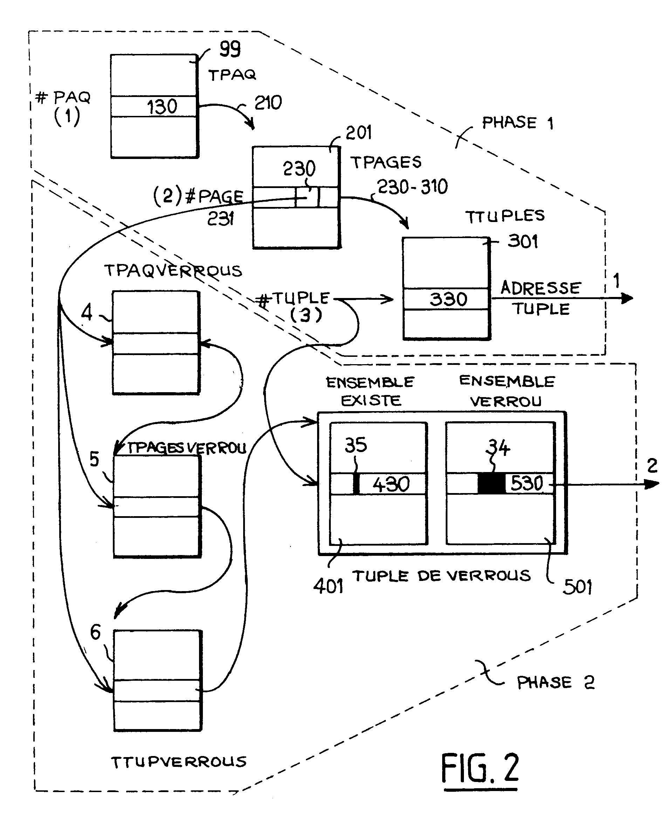

La figure 2 récapitule le fonctionnement de l'unité de gestion mémoire suivant l'invention.

La phase 1 consiste à utiliser successivement les ensembles de tables TPAQ 99, TPAGES 201, TTUPLES 301 à partir des numéros de paquets 1, de pages 2 et de tuples 3 de l'adresse logique source, afin d'obtenir l'adresse physique résultat 1.

La phase 2 consiste à aller chercher l'information de verrouillage pour l'objet accédé, avec deux aspects :

- consultation de l'ensemble de tables de masquage de verrou EXISTE 401, qui permet de savoir s'il existe ou non un verrouillage sur l'objet en demande d'accès. Cette information se trouve dans le bit "35" du rang de l'objet dans la page, puisque comme on l'a déjà vu, chaque tuple verrou correspond avantageusement à une information de verrouillage pour une page complète (voir fig. 3a);

- consultation du champ d'état de verrouillage 530 de l'ensemble de tables de verrou 501, correspondant à la page en demande d'accès; et consultation dans ce champ 530 de l'information spécifique de verrouillage 34 pour l'objet en demande d'accès.

La consultation de tables EXISTE 401 et VERROU 501 est effectué à partir de deux informations distinctes :

- une information d'adresse physique des enregistrements 430, 530, obtenue par traitements successifs, dans les tables TPAQ, TPAGE, TTUPLE, de l'adresse logique de verrou 231 fournie en phase 1 lors de la consultation de l'ensemble de tables de pages TPAGES;
- une information de rang du bit 35, et de l'information spécifique de verrouillage d'objets 34 respectivement, dans les enregistrements 430, 530, à partir du numéro de tuple 3 de l'adresse logique d'objet.

Le résultat fourni par la phase 1 est l'adresse physique 1 de l'objet en demande d'accès.

Dans le cas où ledit espace intégré comporte à la fois des tables d'adresses d'objets, des tables d'adresses de verrous et des tables d'information de verrouillage,

ladite unité comporte des moyens de renvoi d'une adresse physique de verrous obtenue en sortie dudit espace intégré pendant ladite phase 2, vers l'entrée dudit espace intégré pour le pointage et l'obtention de l'information de verrouillage d'objets en sortie dudit espace mémoire intégré, au cours d'une troisième phase de fonctionnement de l'unité.

Le résultat fourni par la phase 2 est l'information spécifique de verrouillage 2 dudit objet en demande d'accès.

Un bus interne 600 qui connecte les banques mémoire avec celles de la machine hôte permet d'initialiser le cache/MMU en début de session, et de le mettre à jour, soit en vue de créer un tuple "verrous" relatif à une page qui n'en comportait pas, soit lors de modifications de la page de données qui peut entrainer, en plus des modifications du verrou courant, une augmentation de la taille de l'ensemble verrous.

Le bus interne 600 permet également d'effectuer la mise à jour de tables TPAQ, TPAGES et TOBJ, étant entendu que toute modification d'une table quelconque implique la mise à jour des tables situées en amont.

Dans la solution présentée à propos du premier mode de réalisation, la conversion des identifiants physiques en adresse physique repose de façon classique sur des indirections à plusieurs niveaux. L'identifiant est composé de plusieurs champs : numéro de segment (implicité), numéro de paquet de placement, numéro de page, numéro d'objet <N°PAQ, N°PAG, N°OBJ>. Le numéro de paquet est l'indice dans la table des paquets du segment d'un élément qui contient l'adresse d'une table des pages. Le numéro de page est l'indice dans la table des pages d'un élément qui contient l'adresse d'une table des objets, et l'adresse d'une table des verrous. L'adresse peut être une adresse en mémoire ou sur disque, ces deux cas sont distingués par un bit de l'adresse. Le numéro d'objet est l'indice dans une table des objets d'un élément contenant l'adresse de l'objet recherché. Les pointeurs sur les tables de niveau inférieur peuvent être remplacés par des identifiants de ces tables, afin de permettre leur déplacement ou leur swapping sur disque. Il existe donc des "tables des tables".

Les tables sont des objets que nous définissons comme des objets de type "tableau", qui sont formés d'une suite d'éléments de même type et de longueur fixe précédés par le nombre d'éléments. Les opérations associées aux tableaux permettent, entre autres, l'accès au ième élément ou l'adjonction ou la suppression d'un dernier élément. L'espace physique alloué à un table est augmenté par granules dépendant de la taille de l'objet, ceci afin de limiter le nombre moyen de recopies d'un élément lors de l'adjonction de nouveaux éléments. Dans le cas des tables, cette adjonction intervient lorsque le nombre de paquets d'un segment, de pages d'un paquet ou d'objets dans une page, augmente. L'adresse d'un élément recherché dans une table peut être obtenue par le cache-MMU qui additionne le numéro de l'élément dans cette table avec l'adresse de celle-ci. Ces additions peuvent s'effectuer en utilisant de pistes distinctes pour l'adresse de début de table et pour l'adresse d'élément, ce qui conduit à des tables de longueur fixe, ou en utilisant des additionneurs, ce qui permet des tables de longueur variable. Le "cache-MMU" utilise des tables de longueur variable.

Le mécanisme énoncé dans le paragraphe précédent n'assure cependant pas l'invariance des identifiants. En effet, quand on modifie un objet, il faut modifier son identifiant. Un tel identifiant est appelé OID (Object Identifier) physique. Ceci peut être grandement pénalisant dans le cas d'objets partagés où l'on aura alors des mises à jour multiples.

Afin de pallier cet inconvénient on introduit une nouvelle notion à la base du second mode de réalisation décrit ci-après : l'identifiant (ou OID) logique. Les OID physiques seront alors stockés dans un vecteur paginé. En effet, la place nécessaire pour stocker tous les identifiants physiques d'une relation (ou segment) sera supérieure à une page. De ce fait, le vecteur sera paginé et une hiérarchie de tables permettra l'accès aux pages contenant les identifiants physiques. Il convient de disposer d'une hiérarchie permettant de gérer un nombre suffisant d'objets dans un segment (donc d'identifiant physiques dans un vecteur paginé). Les identifiants physiques seront alors stockés dans des tables systèmes appelées tables des objets (TOBJ) 13. Ces TOBJ 13 seront accédées au travers des tables de niveau supérieur : les tables des pages logiques (TPAGL) 12, elles-mêmes accédées au moyen de tables de paquets logiques (TPAQL) 11. Un OID logique 10 est alors l'indice d'un identifiant physique dans le vecteur paginé. De plus, les identifiants physiques étant de taille fixe, il n'est jamais nécessaire de les déplacer, mais simplement de les remplacer, et de ce fait, un OID logiquement 10 est donc invariant et aura le format suivant : <N°PAQL, N°PAGL, N°Objet>. De même que pour les OID physiques, les divers champs de l'OID logique permettent de descendre la hiérarchie des tables décrivant le vecteur paginé.

Ce mécanisme permet d'offrir des identifiants d'objets invariants. En effet, si un objet est déplacé, son OID physique sera modifié comme précédemment, mais son OID logique, lui, n'aura aucune raison de l'être, et reste de ce fait transparent au déplacement d'objet.

Les TPAQL 11, TPAGL 12, et TOBJ 13, seront qualifiés de "tables logiques", alors que les tables des paquets 14 et de pages 15 physiques seront désignées par "tables physiques". Il est important de noter que la table des paquets logique 11 est seulement un niveau du vecteur paginé. Elle ne peut servir à un placement. En effet, le numéro de paquet logique ne peut être modifié en cas de changement de valeur d'un objet. Cependant, chaque niveau du vecteur paginé peut avoir une structure particulière, comme nous le verrons pour les tables des pages logiques 12.

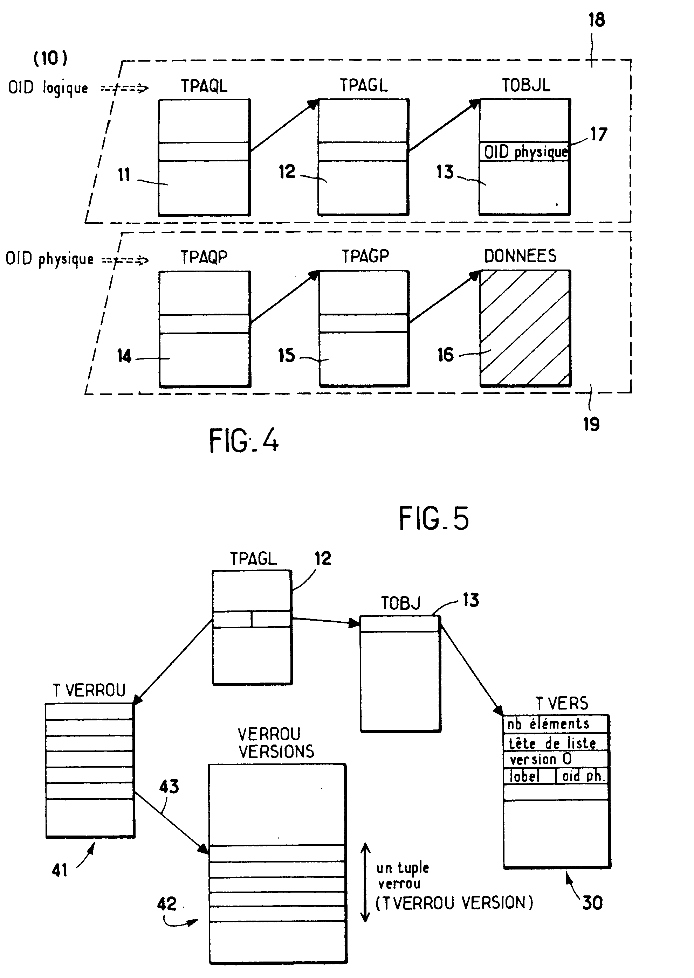

L'identifiant physique 17, qui représente donc une adresse logique intermédiaire, est modifié par rapport à la version précédente ; son numéro d'objet est remplacé par un déplacement dans la page. En effet, en cas de modification de l'adresse d'un objet dans une page, il est aussi simple de modifier le déplacement correspondant à l'objet dans l'identifiant physique 17 (situé dans la TOBJ 13), que de change la correspondance entre un numéro d'objet et le déplacement correspondant. Cette solution évite de consacrer un niveau de table à cette correspondance, et diminue donc, d'une unité, le nombre de niveaux de tables. Les niveaux de tables nécessaires au décodage des identifiants physiques sont donc au moins au nombre de deux, pour permettre un nombre suffisant d'identifiants : les tables des paquets physiques (TPAQP) 14 et les tables de pages (TPAGP) 15 (figure 4). Avec les pages de 4 K octets et des pointeurs ou identifiants sur 32 bits la taille autorisée pour un segment est ainsi de 4 giga-octets. Pour aller au delà de cette valeur des relations multi-segments ou un niveau supplémentaire de tables seraient nécessaires. La TPAQP 14 (ou plus généralement chaque niveau de tables physiques supérieur au tables des pages physiques) permet un placement des objets dans chaque segment. Pour les requêtes les plus fréquentes, il est ainsi possible de ne monter en mémoire que les objets effectivement nécessaires. Par contre, les identifiants physiques n'étants pas placés, il sera en général nécessaire d'avoir en mémoire l'ensemble des tables "logiques" d'une relation (TPAQL 11, TPAGL 12, TOBJ 13), sauf pour des accès tuple à tuple.

L'invention concerne la réalisation de moyens de verrouillage de l'accès aux objets mémorisés, à travers l'unité de gestion d'accès mémoire. Ces moyens de verrouillage, selon l'invention, sont utilisés selon des procédures de gestion de conflit spécifiques, permettant de minimiser la charge du système d'exploitation et le coût de la gestion de concurrence, et d'augmenter les vitesses d'accès aux objets appelés.

Dans le mode de réalisation le plus simple de l'invention, tel que représenté en figure 1, les verrous sont gérés d'une manière similaire à la solution des identifiants physiques présentée dans le premier mode de réalisation.

Plus précisément, on prévoit une table de verrou 41, contentant des informations spécifiques de verrouillage associées à chaque objet accédé. Toutefois, à la différence du brevet français n°87 09970 du 15.07.1987, les identifiants physiques 17 de la présente invention ne comportent plus un numéro d'objet, mais un déplacement.

Par suite, il n'est pas possible d'associer une table de verrous à une table des pages physiques, puisqu'on ne pourrait déterminer le numéro d'élément de cette table à accéder pour un objet donné. Aussi, comme illustré en figure 5, la table des verrous TVERROUS 41 est associée à une table des pages logiques, et accédée à partir de la TPAGL 12. La table des verrous 41 sera associée à une TOBJ 13, c'est-à-dire qu'elle contiendra autant de verrous qu'il y a d'identifiants physiques 17 dans la TOBJ 13 concernée. Ce nombre d'éléments sera en général de l'ordre de 1K, sauf pour les relations comportant moins de 1K objets. Il est à noter qu'il existe une homothétie entre les éléments d'une table des verrous 41 et les OID physiques 17 de la TOBJ 13 correspondante, à savoir que le ième élément de la table des verrous 41 représentera le verrou de l'objet référencé par le ième OID physique de la TOBJ 13. C'est donc le champ ⟨N°OBJET⟩ de l'OID logique 10 de l'objet qui permet de retrouver son verrou dans la table des verrous 41.

EP 0 304 348 B1

Dans le cas où il existe des verrous au niveau de version d'objets, le verrou de la table TVERROUS 41 est remplacé par un pointeur ou un identifiant 43 permettant d'accéder à une table des verrous de version (VERROU-VERSION) 42 de l'objet. L'existence de verrous au niveau des versions n'est pas obligatoire, en particulier elle n'est pas nécessaire dans le cas de versions historiques. On peut en effet, considérer que les modifications portent en général sur les dernière version, les modifications rétroactives étant soit plus rares, soit dépourvues de sens. Si la date rangée dans l'étiquette de version est la date de la mise à jour, et non la date d'effet, il ne peut y avoir de modifications que sur la dernière version. Un seul verrou suffit alors pour l'ensemble de l'objet. Cependant, si la sémantique de l'objet admet les modifications sur les versions passées, elles restent tout à fait réalisables par le cache-MMU. Dans le cas de versions alternatives, on aura alors un verrou par version. On peut noter qu'en général le nombre de versions (donc de verrous de l'objet) est très inférieur au nombre maximum possible dans une page (512 avec les pages usuelles de 4K). Un nombre de versions alternatives supérieur à 64 parfait déjà très élevé. Ceci pourra être utilisé pour l'optimisation de l'implantation dans la solution préférentielle.

Les procédures de gestion de concurrence utilisées sont semblables à celles mises en oeuvre pour la solution avec des identifiants physiques, telle que décrite à propos du premier mode de réalisation.

Un verrou est composé d'un champ compteur, d'une estampille de transaction et d'un ou plusieurs bits. Le compteur est incrémenté à chaque pose d'un verrou en lecture sur un objet (ou une version d'objet), et décrémenté à chaque retrait de ce verrou. D'autre part, il est égal à -1 pour un verrouillage en modification, et à -2 pour un masquage.

Une opération de modification correspond à une opération d'écriture. Une opération de masquage correspond à la situation dans laquelle une écriture a résulté en une insertion d'un objet dans une relation source ; dans ce cas, seule sera autorisée à l'accès audit objet, la transaction courante ayant effectué l'opération d'écriture, du fait de la pose du verrou de masquage. Ceci signifie que les autres transactions se poursuivent en ignorant l'objet masqué.

Un bit sert à signaler qu'au moins une transaction s'est mise en attente sur cet objet (ce qui sert à éviter les problèmes de famines).

Tant qu'un objet n'est accédé en lecture que par une seule transaction, il est intéressant de conserver l'estampille de celle-ci dans le verrou. Ceci permet d'autoriser cette transaction à accéder l'objet en modification tout en changeant le mode de verrouillage. Par contre, si l'objet est verrouillé en lecture par plusieurs transactions, l'estampille n'est pas renseignée. La liste des verrous à décrémenter en fin de transaction est constituée par la relation temporaire résultat de l'opération où ces verrous ont été posés.

En cas de demande de verrouillage en écriture d'un objet verrouillé en lecture (c'est-à-dire dont le champ compteur du verrou est supérieur à zéro et dont l'estampille n'est pas renseignée), il faut vérifier si le compteur a été incrémenté uniquement par la transaction courante ou par d'autres transactions. Nous dirons qu'il y a "conflit possible" ; il faut vérifier s'il s'agit ou non d'un "conflit réel". Le mécanisme adopté est alors le suivant : soit une transaction T1 souhaitant accéder l'objet O1 en écriture. Le verrou V1 de cet objet indique qu'il est verrouillé en lecture et qu'aucune transaction n'est en attente dessus. L'estampille de V1 n'est pas rensignée ; il y a donc conflit possible sur O1. La transaction T1 positionne alors le bit de famine de V1 (bit destiné à éviter qu'une transaction lectrice ne verrouille alors qu'une transaction écrivain est en attente) afin d'empêcher toute transaction ultérieure à T1 de modifier l'état de V1. L'OID de O1 est alors stocké dans une relation temporaire des conflits possibles (TE1) de T1. A la fin de l'opération T1, une procédure est chargée de recopier les compteurs des verrous sur lesquels porte un conflit possible (trouvés grâce à la temporaire TE1) dans des tables copies. Les relations temporaires résultats de T1 sont alors parcourues et les copies des compteurs sont décrémentées suivant les OID correspondants figurant dans ces temporaires. Il s'agit évidemment des seules relations temporaires référençant la relation permanente à laquelle appartient l'objet. En fin de décrémentation, si toutes les copies ont un compteur nul, il n'y a pas de conflit, et il est possible de créer un verrou en écriture pour chaque identifiant rangé dans la relation auxiliaire. Dans le cas contraire, il faut défaire l'opération, au moins en ce qui concerne les objets pour lesquels il y a conflit et qui ne peuvent valablement participer au résultat tant que les verrous qui causent le conflit existent. La solution consistant à défaire tout ou partie d'une opération, permet aussi d'utiliser le verrouillage deux phases avec un système d'exploitation ne gérant pas les attentes. L'abandon d'une partie de l'opération est en tout cas possible si le verrouillage est effectué en début de requête lors des opérations de sélection, car il est trivial de retirer de la relation résultat (ou de ne pas les y ranger) les objets pour lesquels il y a conflit, et de reprendre l'opération pour ces objets ensuite. Cette méthode originale respecte le protocole de verrouillage deux phases.

Pour décrémenter les copies de verrous correspondant à des conflits possibles, il serait possible d'effectuer une intersection entre la liste des identifiants correspondants de la relation auxiliaire des conflits possible et ceux des relations temporaires de la transaction, et de décrémenter le compteur de la copie

9

pour chaque élément appartenant à l'intersection. Cependant, cette solution demanderait une intersection de listes normalement effectuée par hachage, et qui serait beaucoup plus coûteuse que les autres opérations de gestion de verrous considérées jusqu'ici. Une solution beaucoup plus favorable paraît être de créer pour chaque table de verrous dont au moins un élément fait partie de la relation auxiliaire, une table COPIE 50 accédée par un pointeur rangé dans la table des pages logiques 12. L'accès à la copie de verrou et sa décrémentation se fera alors exactement comme la mise à jour d'un verrou ordinaire. Le nombre de pages des tables COPIE 50 sera toujours limité car ces pages sont locales à l'opération de décrémentation, et sont désallouées aussitôt après. Le nombre total de ces pages gérées par le système est donc au plus égal au nombre de verrous en écriture demandés par l'opération, et au nombre de pages de verrous de la relation considérée. Dans le cas d'opérations de grande taille (par exemple plus de 1000 verrous demandés et plus d'un million d'objets dans la relation), il est possible de décomposer l'opération au cours de laquelle sont demandés les verrous en plusieurs opérations, et d'effectuer la décrémentation des copies à la fin de chacune d'elles. Cette décomposition est particulièrement aisée si les verrous sont demandés au cours des opérations de sélection effectuées en début de requête ; en effet, ces opérations peuvent être décomposées de façon arbitraire.

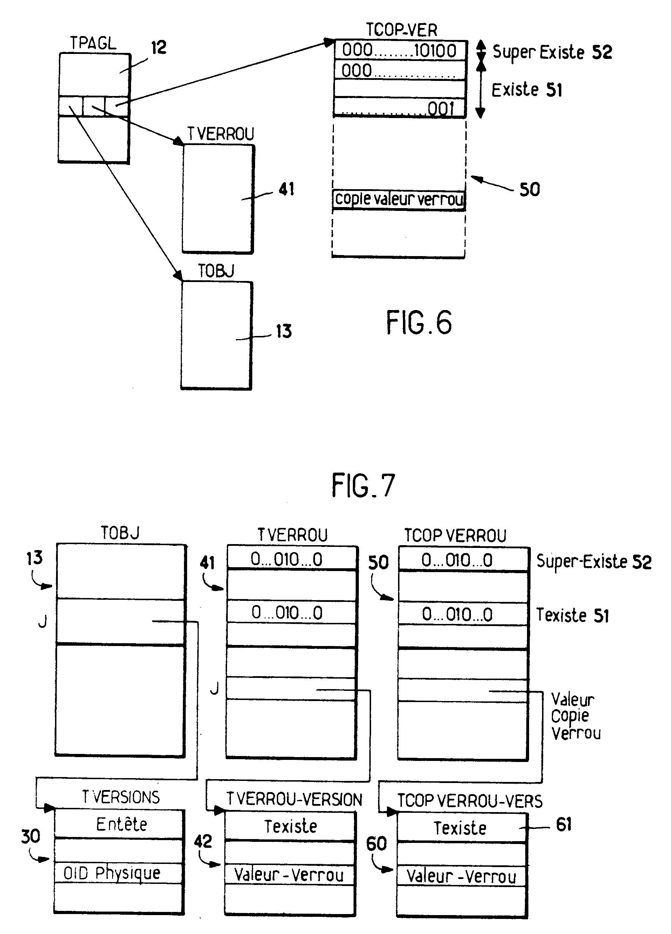

Cependant, ce mécanisme perdrait tout intérêt si la création des pages de COPIE 50 se faisait en recopiant la totalité de la page de verrous correspondante (dont la plupart des éléments ne font pas partie de la relation auxiliaire des conflits possibles). Il est nécesaire de limiter la recopie aux verrous pour lesquels il y a un conflit possible au moins en ordre de grandeur. Cet objectif est atteint en utilisant un mécanisme de masquage des mots de la page de copie. Le mécanisme utilise un bit de masque pour chaque mot ; l'ensemble de ces bits est rangé dans un tableau de bits appelé EXISTE 51. Les mots pour lesquels le bit de masque est à 0 sont non significatifs et n'ont pas à être initialisés. Comme les tables de verrous 41 font en général une page, le masque sur la page de copie 50 comporte environ 32 mots de 32 bits et son initialisation complète augmenterait beaucoup le coût de la copie. On définit donc un masque du masque, appelé SUPEREXISTE 52, qui comporte 32 bits. Ce masque du masque est seul à être complètement initialisé. Le coût de recopie d'un verrou est donc l'initialisation ou la recopie de 3 mots de 32 bits. Lorsque l'on accède à un identifiant d'objet d'une temporaire au cours de la décrémentation, on recherche s'il existe une copie de verrou de même identifiant en accédant d'abord au pointeur sur la table de copie dans TPAGL 12, puis au SUPEREXISTE 52 et au EXISTE 51, enfin à la copie. A chacun de ces accès, il y a une forte probabilité (qui dépend cependant de l'application) que le mot accédé indique que le niveau suivant est non significatif, ou que la copie est déjà nulle (figure 6).

De façon avantageuse, lesdits premier 51 et/ou second 52 tableaux de bits de masquage sont stockés dans un espace mémoire de tables distinct de celui contenant lesdits ensembles de tables de verrous 41, copies de verrous 50 respectivement, et sont accessibles parallèlement auxdits espaces mémoire contenant les ensembles de tables d'objets 13 ou de versions d'objets 30.

Cette méthode présente l'avantage de ne demander aucune structure matérielle particulière dans le cache-MMU en dehors de celles qui sont déjà nécessaires pour la gestion des objets et des verrous. Le cache-MMU, qui n'est pas conçu initialement dans ce but, est parfaitement adapté à ce procédé. Au surplus, il permet d'accéder à une copie, de la tester et éventuellement de la décrémenter dans une durée qui paraît minimum. En général, cette durée est égale à celle de 3 accès mémoire (deux pour recopier l'OID de l'objet dans le cache-MMU, un pour lire la copie) et un test. Aucune méthode logicielle ne paraît susceptible d'être aussi rapide.

Les pages de verrous 41 peuvent être supprimées si tous les verrous qu'elles contiennent sont nuls. La réinitialisation de la page 41 lorsque celle-ci devra être de nouveau accédée, est moins coûteuse qu'une lecture sur disque. La sauvegarde d'une page de verrous 41 contenant des verrous non nuls est également possible, mais la relecture de la page sur disque sera nécessaire au plus tard dès que la transaction qui a posé les verrous sera terminée (pour la phase de déverrouillage).

De façon avantageuse, selon l'invention, on effectue une gestion de type "SWAP" sur les pages de verrous, c'est-à-dire qu'on réalise leur appel de mémoire et leur réintroduction en mémoire, de façon alternative, selon les besoins et en fonction des disponibilités en mémoire centrale. Par swap des verrous au sens large, on entend ici les deux opérations de sauvegarde des pages de verrous, et de relecture de ces pages sur disque, étant entendu que la suppression de pages vides est préférable à l'opération de swap proprement dite. En conséquence pour gérer efficacement ce swap, il faut savoir si la page est vide.

Deux solutions sont possibles, soit un compteur des verrous non nuls, soit un masque et un masque du masque comme pour les copies de verrous. Avec la première solution, le compteur doit être mis à jour chaque fois qu'un verrou passe de l'état nul à l'état non nul ou réciproquement. Cependant, cette solution ne permet pas d'accélérer l'initialisation de la page de verrous. Comme celle-ci représente une fraction non négligeable de la durée d'une E/S, il sera alors préférable de ne pas désallouer la page de verrous lorsqu'elle sera vide. Ceci constitue un obstacle à une bonne gestion de l'espace mémoire, surtout si les verrous sont rangés dans le cache-MMU qui représente un espace mémoire plus limité que l'espace mémoire global. La deuxième solution est d'utiliser un masque (TEXISTE) et un masque du masque (SUPEREXISTE) pour les pages de verrous. L'espace nécessaire à ces deux structures doit de toute façon être réservé pour qu'une correspondance simple soit possible entre les pages de verrous et les pages de copies de verrous. D'autre part, les fonctions d'accès à travers ces deux structures existent de toute façon pour la copie de verrou. Dans le cas le plus fréquent, l'accès à un verrou à travers ces masques demande un ou deux accès mémoire de plus que la solution utilisant un compteur. Par contre, l'initialisation d'un verrou demandera seulement trois accès mémoire au lieu de 1000 environ. Par suite, il sera possible de toujours désallouer les pages de verrous vides, ce qui paraît susceptible de beaucoup améliorer la gestion de la mémoire. La solution préférentielle que nous présentons utilise donc ce mécanisme, qui est supporté par le circuit de cache-MMU étendu. Avec celui-ci, l'accès aux masques et au verrou se fait en parallèle et ne demande donc qu'un seul accès mémoire.

La gestion de conflit, à partir de tables de verrous, dans le cas d'une mise en oeuvre de l'invention avec versions d'objets, est très semblable au mécanisme décrit précédemment.

En suivant le principe d'une correspondance simple entre les tables d'identifiants physiques et les tables de verrous, il est proposé pour les verrous de versions, une structure très voisine de celle des tables de versions. A chaque table des versions alternatives correspond une table des verrous de versions (TVERROUS__VERSION), qui comporte le même nombre d'éléments. Dans la table de verrous TVERROUS le verrou est remplacé par un pointeur ou un identifant de la table de verrous de versions. Dans cette table, le numéro de version est l'indice du verrou de la version. Afin de pouvoir désallouer les tables vides, un masque (TVERROUS__VERSION.TEXISTE) définit les verrous significatifs ou non. La consultation du masque permet de savoir s'il existe encore au moins un verrou non nul (dans le cas contraire le masque est à zéro). On peut s'interroger s'il faut également un masque du masque. En pratique, cette solution n'est utile que si le nombre de versions de l'objet dépasse 64 (le masque a alors plus de deux mots de 32 bits). D'autre part, l'existence d'un verrou par version n'est pas utile pour les versions historiques, où en général, seule la dernière version est modifiée. Pour les versions alternatives, il paraît improbable qu'on dépasse souvent 64 versions et un seul niveau de masque peut suffire. Cependant, pour des raisons de simplicité et de généralité, il peut être préférable que la solution matérielle supporte les deux niveaux de masque. Notons que la place d'un masque identique à un ou deux niveaux devra être réservée dans la table TVERSIONS. Cette place peut être ou non utilisée. Une utilité d'une masque sur TVERSIONS peut être de permettre de laisser certaines versions non définies, pour certains des objets, sans devoir mettre l'identifiant d'objet à NIL.

Dans la gestion des copies de verrous, la structure de la copie de la table des verrous de versions (TVOPVERROUS__VERS) 60 est la même que celle de la table des verrous de versions 42. Grâce au masque de cette copie de verrous, seuls deux ou trois mots de données doivent être initialisés lors de la création d'une copie de verrous de versions contenant un seul verrou (figure 6).

Cette évaluation ne tient pas compte de la gestion des trous nécessaire pour déterminer l'emplacement de cette table 60. L'espace mémoire supplémentaire nécessaire pour gérer des copies de verrous de versions dépend du nombre de versions de l'objet, mais comme on se limite ici en général aux versions alternatives, cet espace est en général de l'ordre de 16 à 64 mots par verrou, ce qui augmente peu l'espace mémoire occupé par les copies de verrous. D'autre part, l'accès à la TCOPVERROUS__VERS 60 ne sera nécessaire que si l'élément de la table TVERROUS 41 qui correspond à l'objet est non nul, ce qui ne sera habituellement pas le cas. Par suite, ce mécanisme n'augmente pas non plus de façon significative le nombre d'accès mémoire pour la gestion des copies de verrous. Nous pensons donc qu'il s'agit d'un mécanisme tout à fait sain pour ces opérations.

L'unité de gestion suivant l'invention permet également de résoudre les problèmes d'interblocage d'au moins deux transactions sur une même relation.

En effet, lorsqu'une transaction verrouille en lecture au moins un objet d'un segment ou d'une relation, ou est mise en attente par suite d'un verrou d'une autre transaction sur un tel objet, elle pose un verrou en intention de lecture ou d'écriture ou une demande d'un tel verrou sur la relation, ou un verrou en intention de lecture seulement, lesquels verrous ou demandes de verrou, contiennent chacun l'identification de la transaction qui le demande.

Lesdits verrous sont sans effet sur la mise en attente des transactions, et peuvent être représentés de façon classique à raison d'un bit par transaction source possible, par relation, et le cas échéant, par type de verrou (lecture, écriture, demande de verrou).

Lorsque plusieurs transactions sont en attente, la possibilité d'un interblocage est recherchée en traitant des verrous intentionnels comme des verrous effectifs, par exemple, par la méthode du graphe des attentes, l'interblocage ainsi détecté étant en général un interblocage possible et non certain, puisque seuls les conflits dûs à une demande de verrou sur un objet donné d'une relation ou segment, lequel objet est déjà verrouillé, peuvent déterminer la mise en attente d'une transaction selon le procédé de la revendication.

Les cycles d'attente possible ainsi détectés sont alors éventuellement vérifiés en tout ou partie en recherchant, pour au moins une première transaction ayant un verrou intentionnel sur une relation pour laquelle une autre transaction du cycle est en attente sur un ou plusieurs objets, si ladite première transaction a elle-même au moins un verrou sur un de ces objets, ce qui se vérifie si l'intersection entre la relation résultat de l'opération, où ont été posés les verrous par ladite première transaction, et les identifiants des objets sur lesquels ladite autre transaction est en attente, est non nulle.

De façon avantageuse, toute recherche d'une intersection entre deux relations résultat d'une opération, représentés par des ensembles d'identifiants d'objets ou d'identifiants étendus, et notamment la recherche d'intersection non nulle du processus de résolution d'interblocage, est effectuée en positionnant, à une valeur donnée, les bits de masque associés aux copies de verrous de chaque objet selon l'une quelconque des revendications 11 et 12, pour les objets dont les identifiants font partie de l'une des relations résultat, et en testant ces bits de masque pur chaque identifiant d'objet de l'autre relation ; la recherche d'une intersection non nulle pouvant être arrêtée après la rencontre du premier bit de masque correspondant à l'existence d'une objet de l'autre relation résultat, et l'accès à chaque bit de masque pouvant être effectué à l'aide de l'unité de gestion de mémoire faisant l'objet de la présente demande de certificat d'addition.

Dans le but de gérer la relance d'une transaction sur laquelle on a constaté un conflit d'accès à un objet, au cours d'une demande de pose de verrous en écriture sur ledit objet par une opération de la séquence d'opérations définissant ladite transaction,

procédé caractérisé en ce qu'on calcule un critère de relance de ladite transaction égale à la différence entre la valeur du champ compteur de verrous associé audit objet et la valeur dudit résultat de décrémentation contenu dans le champ compteur de la copie de verrous associée à ladite opération en attente,

et en ce qu'on place sélectivement ladite transaction dans l'un des cas suivants :

- on met en attente simple ladite transaction lorsque ledit critère de relance est égal à zéro, c'est-à-dire lorsque ladite transaction n'a pas posé de verrou en lecture sur ledit objet ;
- on met en attente prioritaire, ladite transaction lorsque ledit critère de relance est non nul, c'est-à-dire lorsque ladite transaction a posé au moins un verrou en lecture sur ledit objet ;
- on constate un interblocage sur ledit objet lorsque il existe déjà une transaction antérieure mise en attente prioritaire sur ledit objet et que la transaction en cours est en condition d'attente prioritaire, et on abandonne l'une desdites transactions antérieures et courantes.

De façon avantageuse, dans le but d'effectuer une étape de relance d'une transaction mise en attente simple ou en attente prioritaire selon la revendication 21, caractérisé en ce que :

- on mémorise, dans un tableau d'attente, une référence de la liste des transactions en attente sur ledit objet,
- on range l'indice de cette référence dudit tableau d'attente dans le champ à estampille du verrou associé audit objet, et on incrémente dans le descripteur de chacune desdites transactions en attente, un nombre d'objets sur lesquels elle est en attente dans un compteur d'objets bloquants,
- on décrémente d'une unité ledit compteur d'objets bloquant du descripteur de la transaction mise en attente prioritaire sur ledit objet, lorsque la valeur contenue dans le champ compteur de verrous associés audit objet atteint un seuil égal à la valeur dudit critère de relance, c'est-à-dire lors du déverrouillage complet dudit objet par les autres transactions, et on retire ladite transaction de la liste des transactions en attente sur ledit objet,
- on décrémente d'une unité ledit compteur d'objet bloquant du descripteur de chaque transaction mise en attente simple sur un objet lorsque la valeur du champ compteur associé audit objet est égal à zéro, c'est-à-dire lors du déverrouillage complet dudit objet, et on retire ladite transaction de la liste des transactions en attente sur ledit objet,
- on relance toute transaction dont le compteur d'objets bloquants est revenu à zéro.

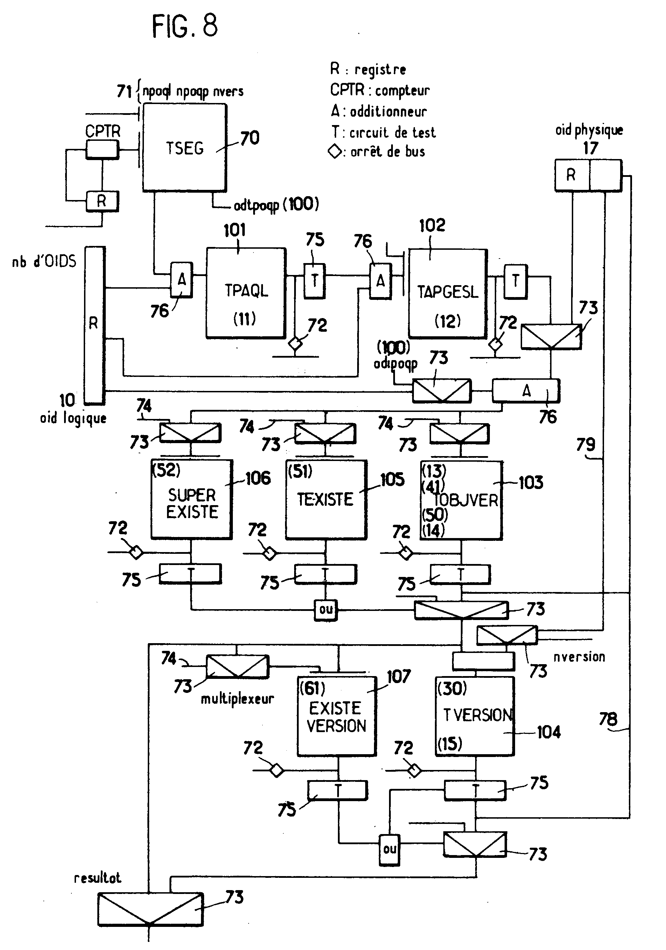

La figure 8 représente un mode de réalisation avantageux d'une implantation pratique du second étage supérieur d'adressage de l'unité de gestion incluant des versions d'objets et les verrous suivant l'invention.

L'unité de gestion est principalement composée de plusieurs espaces mémoire 101, 102, 103, 104, 105, 106, 107 interconnectés sans passer nécessairement par le bus de la machine hôte, d'additionneurs et de multiplexeurs. Dans la solution préférentielle, les espaces mémoires de la version initiale sont conservés. Le cache-MMU étendu inclut donc les espaces TPAQL 101, TPAGESL 102 et TOBJVER 103 (qui contient les tables TOBJ 13, TVERROUS 41, et TCOPIES 50). Le cache-MMU contient aussi trois espaces mémoires supplémentaires : TVERSIONS 104 et TTEXISTE 106, qui contient les attributs SUPEREXISTE 52, et EXISTE VERSIONS 107, qui contient les masques 61 sur les verrous de versions. Comme pour TEXISTE 105 par rapport à TOBJVER 103, l'adresse d'un objet de TTEXISTE 106 exprimée en bits, est la même que l'adresse de l'objet correspondant de TEXISTE 105 exprimée en mots. Avec la taille des mots utilisée, le rapport de ces deux espaces mémoire dans la solution préférentielle est donc de 32. Un petit espace mémoire supplémentaire, d'une trentaine de mots, peut contenir les bases d'adresse des tables de paquets logiques et physiques des segments accédés par le cache-MMU (nous l'appellerons TSEG 70).

Dans ce mode de réalisation, les ensembles de tables de paquets physiques TPAQP 14, et les ensembles de tables de pages physiques TPAGP 15 sont stockés respectivement dans les espaces mémoires 103 et 104 contenant déjà des ensembles de tables 13, 41, 50 d'une part, et 30 d'autre part, appartenant au premier étage supérieur d'adressage 18. De cette façon, il est possible de reboucler sur l'unité de gestion mémoire de la figure 7, à travers l'une des connexions 78 ou 79 fournissant l'adresse logique intermédiaire 17 en sortie du premier étage supérieur d'adressage 18.

En d'autres termes, dans ce mode de réalisation, l'unité de gestion est caractérisée en ce que lesdits ensembles de tables 11, 12, 13 du premier étage supérieur d'adressage 18 sont répartis dans un jeu d'au moins deux espaces mémoires 101, 102, 103, 104 distincts, et organisé de façon hiérarchique,

en ce que les ensembles de tables 14, 15 dudit second étage inférieur d'adressage 19 sont répartis dans au moins certains desdits espaces mémoires 103, 104 de façon à respecter la hiérarchie desdits ensembles de tables 14, 15,

et en ce que chacun desdits espaces mémoires 103, 104 est associé à des moyens de commandes d'accès 73, 76, 78, 79 de façon à être accédé en deux cycles alternés :

- un premier cycle de détermination de ladite adresse logique intermédiaire à partir de ladite adresse logique source, au cours duquel sont adressés sélectivement les ensembles de tables 11, 12, 13 appartenant audit premier étage supérieur d'adressage (18),

- un second cycle de détermination de ladite adresse physique résultat, à partir de ladite adresse logique intermédiaire 17, au cours duquel sont adressés sélectivement les ensembles de tables 14, 15 appartenant audit second étage inférieur d'adressage 19,

lesdits moyens de commande d'accès comprenant des moyens de rebouclage 78, 79 à l'intérieur dudit jeu d'espaces mémoires 101, 102, 103, 104 pour l'enchaînement dudit premier cycle audit second cycle.

On notera que les ensembles de tables, de paquets physiques 14 et de pages physiques 15 peuvent être stockés à des niveaux différents de la hiérarchie d'espaces mémoires 101, 102, 103, 104, pourvu que soit respecté leur ordre hiérarchique propre. Ainsi, moyennant une modification des circuits de rebouclage et de commande d'accès 78, 79, 73, 76, il serait possible, notamment, de stocker l'ensemble de tables de paquets physiques 14 dans l'espace mémoire 102 et l'espace mémoire 103 respectivement, l'adresse physique résultat étant prélevée en sortie de cet espace mémoire 103.

Chacun desdits ensembles de tables dudit premier étage supérieur d'adressage 18, second étage inférieur d'adressage 19 respectivement, est associé à des moyens de sélection d'un enregistrement dans l'ensemble de tables, lesdits moyens de sélection recevant en entrée, d'une part, l'adresse indirecte contenue dans un champ de l'adresse logique source 10, de l'adresse logique intermédiaire 17 respectivement, ledit champ étant de même niveau que l'ensemble de tables d'adressage associé, et d'autre part, pour les ensembles de tables d'adressage autres que l'ensemble de tables de plus haut niveau de chaque étage, une information secondaire d'adressage provenant de l'ensemble de tables de niveau supérieur, et fournissant en sortie l'adresse sélectionnée d'accès à un enregistrement dudit ensemble de tables associé.

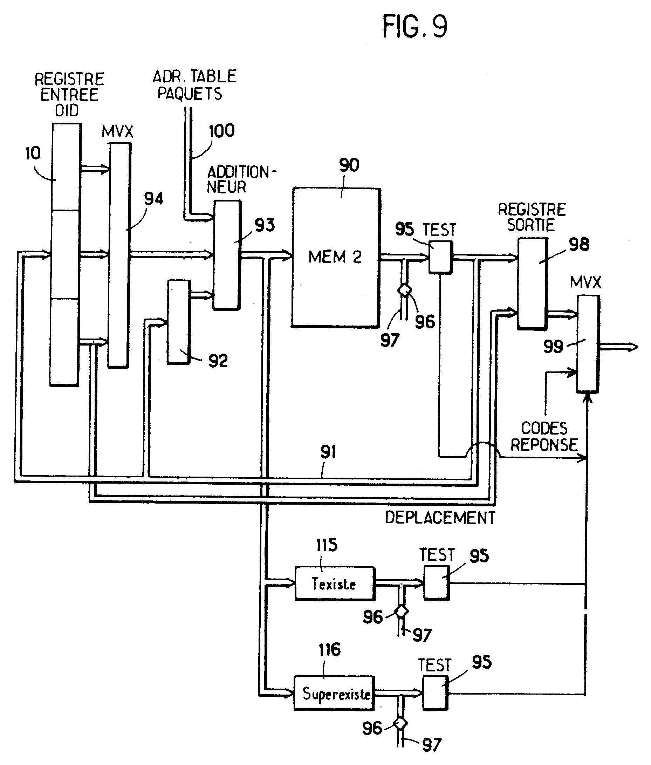

Dans le mode de réalisation de la figure 9, l'unité de gestion de mémoire est caractérisée en ce que tous les ensembles de tables 11, 12, 13, 14, 15 desdits premier et second étages d'adressage 18, 19 sont regroupés dans un espace mémoire unique 90,

et en ce que ledit espace mémoire 90 est associé à des moyens de regroupage et de commande d'accès 91, 92, 93, 94 audit espace mémoire 90, de façon à assurer la séquence d'accès successifs auxdites tables 11, 12, 13, 14, 15 contenus dans ledit espace mémoire 90 au cours d'une opération donnée d'association d'une adresse physique de sortie à une adresse logique source.

Dans le schéma, les moyens de rebouclage 91 sont constitués par un bus alimentant d'une part le registre d'entrée des identifiants 10, 17, et d'autre part, un registre non transparent 92 connectant un circuit additionneur 93 en entrée de l'espace mémoire 90. Le circuit additionneur 93 reçoit également les informations provenant du multiplexeur d'entrée 94, et, pour la détermination de l'adresse physique résultat à partir de l'addresse logique intermédiaire, au moyen du second étage inférieur d'adressage, une adresse de tables de paquets 100. (On retrouve également cette adresse de tables de paquets physiques en entrée d'un multiplexeur 73 dans le premier mode de réalisation de la figure 8.

Les informations secondaires d'adressage délivrés par l'espace mémoire 90 traversent ensuite un circuit de tests 95.

L'adresse physique résultat est enfin délivrée à travers un registre de sorties 98 et un multiplexeur 99.

La mise à jour des informations secondaires d'adressage contenues dans l'espace mémoire 90 est effectuée par l'intermédiaire du bus 97 sur lequel est monté l'arrêt de bus 96.

L'implantation de la figure 9 inclue également les espaces mémoires 115, 116 correspondant aux ensembles de tables de masquage de verrous TEXISTE et SUPEREXISTE. Comme pour le mode de réalisation de la figure 8, ces espaces mémoires 115, 116 peuvent être accédés en parallèle à l'espace mémoire 90. Les espaces mémoires 115, 116 comportent, en sortie, d'une part des circuits tests 95, et d'autre part des bus 97 et arrêts de bus 96 servant à leur initialisation et/ou mise à jour.

Le cache-MMU possède deux modes d'accès : le mode direct et le mode transparent.

En mode transparent, les espaces mémoires du cache sont accédées par leurs adresses à travers le bus de la machine hôte, comme pour n'importe quelle mémoire. Ce mode est utilisé notamment pour les initialisations et pour les swaps, et pour l'accès à des objets dont une partie de tables n'est pas présent dans le cache-MMU.

En mode direct, les tables sont adressées par l'intermédiaire d'un identifiant logique 10, chaque niveau de table participant à l'adressage de la table de niveau inférieur. La sélection de l'un des deux modes s'effectue par l'écriture d'un mot d'état dans le registre STATUS du cache-MMU.

Nous n'envisagerons maintenant que l'accès direct, qui peut se faire avec ou sans gestion des verrous.

Les ports d'entrée du cache-MMU sont alors le registre STATUS, le registre de numéro de segment et le registre de numéro de version. Le port de sortie contient selon le cycle considéré et le mode de fonctionnement une adresse d'objet ou de valeur de verrou. Ces deux types de résultat peuvent également être délivrés dans deux ports de sortie différents. L'adresse d'objet peut être remplacée par une adresse de début de la table des versions, destinée à permettre la lecture de celle-ci en mode transparent. Certaines valeurs spéciales de l'adresse d'objet et de la valeur de verrou indiquent que ces informations n'ont pas été trouvées ou représentent d'autres codes réponses. Le fonctionnement du cache-MMU est à séquencement par les données, l'écriture d'un résultat dans le ou les ports de sortie est déterminé par l'écriture d'un identifiant logique dans le port d'entrée. Un mécanisme de synchronisation utilisant le protocole du bus de la machine hôte peut éventuellement être utilisé. Dans certains cas, les relations temporaires dont les identifiants sont décodés par le cache-MMU sont formées de n-uplets de longueur fixe composés d'identifiants de plusieurs relations permanentes, et éventuellement d'autres informations, comme les étiquettes de versions. Il est souhaitable de ne pas avoir à transmettre un nouveau numéro de segment et de version à chaque décodage d'identifiant appartenant à une relation différente. Dans ce cas, la solution préférentielle est de ranger les adresses de tables de paquets logiques et physiques et le numéro de version pour chaque identifiant du n-uplet dans un groupe de lignes 71 contigües de TSEG 70. Le parcours de ces lignes successives se fait alors de façon cyclique lors du décodage de chaque n-uplet d'identifiants. Le contenu de TSEG 70 est alors chargé une fois pour toutes avant une opération ou un groupe d'opérations, la seule autre information nécessaire avant le début de décodage de plusieurs n-uplets d'identifiants de même type est l'adresse de début du groupe de lignes courant de TSEG 70 et le nombre de lignes de ce groupe. Ces informations sont rangées dans des registres ad hoc en mode transparent. Un séquencement minimum du cache-MMU est alors nécessaire.

Le cache-MMU permet l'initialisation à zéro des masques de SUPEREXISTE 52 et TEXISTE 51. Dans ce but, les bits de poids faible de l'adresse de ces espaces mémoire, qui sélectionnent le bit, sont multiplexés avec un ensemble de bits à 1, à travers des circuits multiplexeurs 73. Il est donc possible de passer d'une écriture d'un bit à l'écriture d'un mot. Une autre solution possible est d'accéder à chaque fois au niveau d'un mot de ces espaces-mémoire, et de positionner ou tester le cas échéant un seul bit. Les opérations dont dispose le cache-MMU sur les espaces mémoire existe 51 et SUPEREXISTE 52 sont : l'initialisation d'un mot (adresses de poids faible à 1, valeurs de données à 0), l'écriture d'un bit à 1, l'écriture d'un bit à 0, la lecture d'un bit. L'initialisation d'un mot peut se faire au niveau de EXISTE 51 (avec positionnement d'un bit correspondant à 1 dans SUPEREXISTE 52) ou dans SUPEREXISTE 52. En cas de lecture d'un bit, celui-ci est testé par le cache-MMU et s'il est à zéro (dans EXISTE 51 ou SUPEREXISTE 52) la valeur de l'élément lu dans l'espace TOBJ 13 est remplacée par un code réponse, grâce à l'usage d'un multiplexeur en sortie de TOBJ 13. En fonctionnement non transparent, les bits de EXISTE 51 ou de SUPEREXISTE 52 ne sont jamais lus directement par la machine hôte, afin de permettre un accès parallèle à ces deux espaces mémoire et à TOBJ 13.

D'une manière générale, le procédé de mise à jour des espaces mémoires de ladite unité de gestion est caractérisé en ce que :

14

EP 0 304 348 B1

- on utilise comme adresse de mise à jour, l'identifiant logique, et éventuellement, un numéro de version, ainsi que la référence à l'espace mémoire où doit s'opérer la mise à jour, ladite référence étant constituée d'un numéro d'espace mémoire, et ledit numéro d'espace mémoire étant décodé pour obtenir le signal d'autorisation d'écriture dans ledit espace mémoire considérée.

La gestion de l'accès aux tables s'effectue de la manière décrite ci-dessous.

Dans ce qui précède nous avons considéré que les adresses contenues dans les tables étaient des adresses physiques. Toutefois, il peut aussi s'agir d'identifiants ; dans ce cas, la table de niveau inférieur n'est pas présente dans le cache-MMU. Son adresse physique peut éventuellement être obtenue dans les tables des différents segments de relations de type "tables" (de façon préférentielle les tables des paquets, des pages, des objets et des versions ainsi que les verrous et copies correspondantes sont rangés dans des segments séparés, ce qui évite d'avoir plusieurs niveaux dans une même page ou un même espace mémoire), normalement rangées dans le cache-MMU. Les identifiants et les pointeurs sont distingués par un bit de poids fort. Il est également possible de distinguer les données rangées dans le cache-MMU et dans la mémoire principale (soit par un bit, soit par la valeur du pointeur). Enfin, on peut envisager que le verrouillage d'un ensemble de versions d'un objet soit fait soit au niveau de cet ensemble, soit au niveau de chacune des versions, ce qui peut être distingué par un bit dans l'élément correspondant de la table TVERROUS 41. L'ensemble de ces cas particuliers est distingué du fonctionnement normal par un test effectué en sortie de chacune des tables où le problème est susceptible de se poser. L'existence d'un identifiant au lieu d'un pointeur ou tout autre cas particulier entraîne le remplacement de l'adresse d'objet ou du verrou par un code réponse, lui aussi distingué de la réponse normale par au moins un bit.

On peut aussi noter que la table des pages logique 11 a trois colonnes (en pratique, quatre dont une quatrième réservée, pour éviter les divisions par trois), alors que la table des pages physique 15 n'en a qu'une. D'autre part, le nombre des adresses d'objets en sortie de la TPAGP 15 est égal au nombre des identifiants de versions dans la TVERS 30, lorsqu'il existe des versions. Aussi, la table des paquets physiques est rangée dans la TOBJ 13, et la table des pages physique 15 est rangée dans la TVERS 30. De même, les verrous de versions et copies de verrous de versions sont rangés dans la TVERS 30.

Dans le schéma de la figure 8, les références T75 représentent des circuits de test, et les références A76 des circuits additionneurs.

Une évaluation du gain de performances dû au cache-MMU selon l'invention, a été réalisée.

Nous examinons d'abord le gain de performances pour une opération de sélection avec gestion de concurrence. Cette opération est susceptible de représenter une part importante de la durée de la plupart des requêtes, en particulier si les calculs de la sélection et des autres opérations sont accélérées par un processeur de bases de données utilisant les algorithmes de [FAUD87a]. Le système accède à l'objet et au verrou, puis réécrit éventuellement celui-ci après l'avoir modifié, si le tuple fait partie du résultat de la sélection. Nous supposons que la machine hôte est un 68020, et que les instructions résident dans le cache d'instructions. Par contre, nous supposons que leur éxécution n'est pas masquée par celle d'instructions précédentes. La durée des principales instructions est alors de 2 cycles pour un calcul simple, et de 4 cycles pour un branchement conditionnel avec une condition non vérifiée. la durée du cycle est de 60 ns. Nous admettons que la durée d'un accès mémoire à travers le bus du 68020 est de 250 ns (la durée minimum est de 180 ns). Avec une éxécution logicielle de l'accès aux tables, la durée de l'accès aux données et aux verrous est la suivante :

* **lecture de l'identifiant logique**      **250 ns**
* **lecture du numéro de version**      **250 ns**
* **lecture de l'adresse de la TPAQL**      **250 ns**
* **lecture de l'adresse de la TPAQP**      **250 ns**
* **accès à l'adresse de l'objet**
     **11 calculs d'adresse (1)**      **1320 ns**

15

```
        6 accès mémoire                           1500 ns
        4 tests                                   1440 ns
   * accès au verrou de la version
        7 calculs d'adresse                        840 ns
        7 accès mémoire                           1750 ns
        7 tests                                   2940 ns
   (réécriture du verrou :s*250 ns, s'étant la sélectivité
   de la sélection)                               _____
        TOTAL pour s=0 :                       10790 ns (1)
```

Avec une éxécution par matériel, les délais sont les suivants :

| | |
|---|---|
| * lecture de l'identifiant logique | 250 ns |
| * écriture de l'identifiant logique dans le cache-MMU | 250 ns |
| * lecture de l'adresse d'objet | 250 ns |
| * test de l'adresse | 360 ns |
| * lecture du verrou | 250 ns |
| * test du verrou | 360 ns |
| (plus réécriture du verrou : S*250 ns) | |
| TOTAL pour S = 0 : | 1720 ns |

Le gain de performances attendu est donc d'un facteur 6,3 environ. Il peut être augmenté du fait que le cache-MMU permet une simplification importante du code qui doit être exécuté à chaque tuple, et diminue donc la probabilité de débordement du cache d'instructions. Si le cache d'instructions déborde, il peut être nécessaire d'ajouter plusieurs microsecondes au total.

Une autre opération qui peut être fréquente, est l'initialisation d'un verrou. Cette opération est susceptible d'intervenir à chaque demande d'un verrou au cours d'une sélection, lorsque l'objet vérifie l'expression de qualification. Il s'agit donc d'une opération qui intervient moins souvent que l'accès à l'objet, puisque le ratio entre ces deux opérations est au plus égal à la sélectivité de l'opération d'interrogation (par exemple, la sélection). Lorsque le tuple de verrous correspondant au verrou n'existe pas, il faut aussi créer ce tuple dans le segment VERROUS 41 et/ou VERROUS_VERSIONS 42. Nous nous plaçons dans cette hypothèse défavorable, où le verrou est un verrou de version, et où la page de VERROUS et le tuple de VERROUS_VERSIONS n'existent pas. l'allocation de la page de VERROUS et du tuple de VERROUS_VERSIONS peut rendre un pointeur, à condition que ces objets contiennent les références arrière nécessaires pour mettre à jour ultérieurement les tables système en cas de besoin (par exemple en cas de swap en mémoire primaire). Dans ce cas, elle ne nécessite pas de création immédiate d'un objet avec mise à jour des tables du segment VERROUS_VERSIONS. Elle demande cependant en tout cas l'accès à une liste de pages libres et à une liste de trous dans ce segment.

Par logiciel, la durée de cette initialisation est la suivante :

```
* recherche du défaut de page
        6 calculs                                        720 ns
(2 pour l'accès à TPAQL, 4 pour l'accès à TPAGL :
extraction du champ, décalage, addition de l'adresse de
table, addition du numéro de colonne)
        3 accès mémoire                                  750 ns
        2 tests                                          720 ns
(la tentative d'accès à l'objet donne pour résultat : 'le
pointeur sur la page de verrous dans la TPAGL est à NIL)
* allocation d'une page de TOBJ
        3 accès mémoire                                  750 ns
        1 test                                           360 ns
* mise à jour de TPAGL                                   250 ns
* accès à la liste de trous de VERROUS_VERSIONS
        2 calculs                                        240 ns
(numéro de liste de trous, adresse dans le tableau
d'entêtes)


        4 accès mémoire                                 1000 ns
        2 tests                                          720 ns
* initialisation de SUPEREXISTE, TEXISTE
        4 calculs
(adresse de mot et adresse de bit)                       480 ns
        2 accès mémoire                                  500 ns
* mise à jour de TOBJ
        1 calcul                                         120 ns
        1 accès mémoire                                  250 ns
* initialisation de VERROUS-VERSIONS,
        3 calculs
(2 pour EXISTE et 1 pour TVERSIONS)                      360 ns
        2 accès mémoire                                  500 ns
        TOTAL                                     _____
                                                        7720 ns
```

En utilisant le cache-MMU cette durée devient :

| * allocation de TOBJ et d'un objet de VERROUS__VERSIONS : | 3070 ns |
|---|---|
| * recherche des défauts de page sur les verrous (écrire l'identifiant, lire le verrou tester le verrou) | 860 ns |
| * écrire TPAGL | 250 ns |
| * écrire TOBJ | 250 ns |
| * écrire VERROUS__VERSIONS | 250 ns |
| TOTAL | 4680 ns |

Le gain n'est ici que d'un facteur 1.65 mais il peut être beaucoup plus important si l'utilisation du circuit permet de faire résider une plus grande proportion des instructions dans le cache d'instructions. Rappelons qu'avec nos hypothèses, la présence de 10 instructions hors du cache peut se traduire par un délai supplémentaire de 2500 ns, et conduit donc à un ratio entre les deux solutions de l'ordre de 2.2. Notons que par objet accédé, l'incidence des initialisations de verrous est au plus s fois les valeurs précédentes, s étant la sélectivité de l'opération (en général, la sélectivité de la sélection).

On constate donc que l'unité de gestion d'accès en mémoire de la présente invention permet un accès à l'objet et un contrôle de ses verrous dans un temps de l'ordre de 1.7 microsecondes par objet accédé. Ce temps de réponse est environ 6 fois plus rapide que l'éxécution des mêmes opérations par logiciel. Comme le temps d'accès aux objets est une part importante du temps de calcul total dans un système évolué de gestion de mémoire virtuelle, l'emploi de ce type de carte pour accélérer un gérant d'objets est très justifié.

Cette part du temps d'accès dans la durée d'une opération est en fait plus ou moins importante selon les algorithmes utilisés pour les calculs. La durée minimum est obtenue avec une machine base de données effectuant les opérations (telles que la sélection-jointure) dans le temps de transfert des données utiles sur le bus de la machine hôte. Les principes d'une telle machine utilisant un parcours appelé "RAPID", ont été décrits dans la demande de brevet américain n° USSN 061 642, qui a été déposée le 15/6/87 pour le compte du CNRS avec la participation de deux des inventeurs de la demande de brevet visée dans cette note. Avec cette machine, le temps d'éxécution d'une opération, par exemple d'une jointure de n tuples avec m, est égal au temps d'accès aux n + m objets, plus le temps d'accès à un attribut de jointure et de transfert de cet attribut, qui peut être de l'ordre de 3 cycles bus pour chaque objet accédé (environ 750 ns). Il est alors particulièrement important que les temps d'accès soient réduits au minimum par l'usage d'une unité de gestion mémoire adaptée. A ce titre, la présence conjointe dans le portefeuille de brevets du CNRS de ce brevet américain et du brevet français visé par cette note, est particulièrement importante. Avec ce type de machine, le gain d'un facteur 6 obtenu par le cache-MMU se répercute en effet entièrement sur la durée de l'opération.

En combinant l'usage du cache-MMU et du processeur RAPID, il est possible de réaliser à chaque seconde, au moins une centaine de transactions comprenant des requêtes ensemblistes, avec des "temps de réflexion" dans chaque transaction de l'ordre e plusieurs dizaines de secondes, conduisant à plusieurs milliers de transactions simultanées. La combinaison de RAPID et du cache-MMU, constitue donc une solution pour évoluer vers les machines à taux de transactions par seconde, très élevés (de l'ordre de 1000 TPS avec 10 processeurs), pour un prix bas et dans un contexte relationnel étendu aux versions et aux identifiants logiques.

**Revendications**

1. Un procédé de gestion de conflit de demandes d'accès à des objets disposés dans un fichier source par des transactions différentes comprenant chacune des opérations appelant au moins un accès à un même objet stocké dans les unités de mémorisation d'un ordinateur, lesdits objets étant adressés à travers une unité de gestion d'accès en mémoire comprenant des moyens d'adressage indirects (18,19) pour délivrer une information d'adressage physique d'objets en réponse à une adresse logique source (10) provenant d'une unité de traitement de l'ordinateur et des moyens de verrouillage comprenant au moins une table de verrous (41) d'accès constituée d'enregistrements, chaque enregistrement desdites tables de verrous d'accès contenant un champ d'information de verrouillage et étant accessible à travers les moyens d'adressage associés à un objet ou à un ensemble d'objets, procédé dans lequel:

- on initialise dans le fichier source tous les champs d'information de verrouillage associés aux objets accédés ;

- on incrémente le champ information de verrouillage de chaque objet, pour chaque demande d'accès audit objet provenant d'une transaction quelconque;
- on mémorise, dans un fichier résultat, le nombre d'accès qu'elle a demandé pour chaque transaction vers chaque objet ;
- à chaque fin d'une transaction en cours, on décrémente dans le fichier source pour chaque objet accédé par celle-ci, l'information de verrouillage de chaque objet, de la valeur de l'information de verrouillage correspondant audit objet dans le fichier résultat;

    et comprenant en outre les étapes suivantes:

- lesdits champs de verrouillage dudit fichier source sont systématiquement dupliqués en une copie identique desdits champs (50, 60) ;
- à chaque occurrence d'un conflit de lecture ou écriture d'un objet par au moins deux transactions différentes, on soustrait de l'information de verrouillage de l'objet en demande d'accès, dans ladite copie desdits champs de verrouillage, le nombre mémorisé dans le fichier résultat pour l'accès audit objet pour la transaction courante;
- on constate un conflit et on met en attente ladite transaction courante lorsque le résultat de l'opération de soustraction est différent de zéro, c'est-à-dire lorsqu'au moins une autre transaction non encore achevée a obtenu l'accès audit objet.

2. Le procédé selon la revendication 1, dans lequel on place dans chacun desdits enregistrements contenant une information de verrouillage un champ d'état de verrouillage contenant une information spécifique de verrouillage pour chaque objet de l'ensemble d'objets associés à l'enregistrement, lesdites informations spécifiques de verrouillage étant placées consécutivement à l'intérieur dudit champ d'état de verrouillage.

3. Le procédé selon la revendication 1 ou 2, dans lequel on place dans chaque information spécifique de verrouillage d'objet au moins un sous-champ compteur de pose de verrous, et/ou un sous-champ d'estampille de transaction, et/ou un bit de famine.

4. le Procédé selon la revendication 3, dans lequel chacune desdites adresses logiques sources provenant de l'unité de traitement est constituée d'au moins deux champs distincts contenant chacun une adresse indirecte, chaque champ correspondant à un adressage indirect de niveau différent et dans lequel on dispose lesdites tables de verrous dans au moins deux ensembles de tables organisées de façon hiérarchique, chacun desdits ensembles de tables de verrous correspondant à un desdits niveaux d'adressage indirects de l'adresse logique source, et dans lequel on associe à chaque ensemble de tables de verrous des moyens de sélection d'un enregistrement, lesdits moyens de sélection recevant en entrée, d'une part, l'adresse indirecte contenue dans le champ correspondant de l'adresse logique source, et d'autre part, le cas échéant, une information secondaire d'adressage provenant de l'ensemble de tables de niveau supérieur, et fournissant en sortie l'adresse sélectionnée d'accès à un enregistrement dudit ensemble de tables associées.

5. Le procédé selon la revendication 4, dans lequel lesdits ensembles hiérarchisés de tables de verrous coopèrent avec lesdits ensembles hiérarchisés de tables d'adressage d'objets, et dans lequel lesdites hiérarchies de tables de verrous et de tables d'objets sont accédées à partir de la même adresse logique source.

6. Le procédé selon la revendication 5, dans lequel lesdites hiérarchies de tables d'adressage d'objets et de verrous sont intégrées, au moins à chaque niveau, dans des espaces mémoires communs.

7. Procédé selon la revendication 6, dans lequel on effectue alternativement l'une des phases suivantes de traduction d'adresses à partir des valeurs contenues dans les champs de l'adresse logique source et d'une adresse logique de verrous provenant de l'une des tables de la hiérarchie de tables d'adressage d'objets:
- traduction de l'adresse logique d'entrée en adresse physique d'objets,
- traduction de l'adresse logique de verrou en information de verrouillage et/ou adresse physique de ladite information de verrouillage.

8. Le procédé selon la revendication 1, dans lequel lesdits ensembles de tables de verrous coopèrent avec des tableaux de bits de masquage des mots de chaque ensemble d'informations de verrouillage, lesdits tableaux étant stockés dans des espaces mémoires accédés en parallèle aux espaces mémoires contenant lesdits ensembles de tables de verrous.

9. Le procédé selon la revendication 8, dans lequel lesdits bits de masquage correspondent à une information d'existence ou non d'une information spécifique de verrouillage à l'état verrouillé, pour l'objet ou l'ensemble d'objets considérés.

10. Le procédé selon la revendication 8, dans lequel lesdits tableaux de bits de masquage sont organisés en une hiérarchie de tableaux sur au moins deux niveaux.

11. Le procédé selon la revendication 3, dans lequel chaque première transaction accédant à un objet, place une étiquette de transaction dans le champ d'estampille de transaction de l'information spécifique de verrouillage dudit objet,
     ladite estampille étant effacée en cas de demande d'accès audit objet par une seconde transaction distincte de la première transaction.

12. Le procédé selon la revendication 11, dans lequel pour une demande de verrouillage en écriture formulée par une opération d'une transaction T1, sur un objet, ou une version d'objets verrouillé(s) en lecture :
     - on positionne, le cas échéant, le bit de famine de l'information spécifique de verrouillage dudit objet, de façon à éviter qu'une transaction lectrice ultérieure n'accède audit objet,
     - on stocke ledit objet, ou son identifiant, dans une relation temporaire de conflit possible associée à ladite transaction,
     - à la fin de ladite opération, on recopie le champ compteur de l'information spécifique de verrouillage de chacun desdits objets stockés dans ladite relation temporaire de conflit,
     - on décrémente lesdites copies de compteur du nombre d'occurrences desdits objets correspondants dans le ou les fichier(s) résultat(s) associés à ladite transaction,
     - on constate un conflit et on annule les effets de ladite opération et on la met en attente, au moins pour lesdits objets en conflit d'accès, lorsque le résultat de la décrémentation est différent de zéro, c'est-à-dire lorsqu'au moins une autre transaction non encore achevée a obtenu l'accès audit objet,
     - on constate l'absence de conflit lorsque le résultat de la décrémentation est égal à zéro.

13. Le procédé selon la revendication 11, dans lequel les tables de verrous (41,42), copies de tables de verrous (50,60), respectivement, contenant lesdites informations spécifiques de verrouillage desdits objets, ou version d'objets, coopèrent avec un premier tableau (51,61) de bits de masquage des mots de chaque page de verrous, copie de page de verrous respectivement, chacun desdits bits étant non significatif par défaut, et spécifiquement initialisé lorsque le mot correspondant contient au moins un verrou significatif.

14. Le procédé selon la revendication 13, dans lequel lesdites tables de verrous (41,42), copies de tables de verrous (50,60) respectivement, contenant lesdites informations spécifiques de verrouillage desdits objets, ou versions d'objets, coopèrent avec un second tableau (52) de bits de masquage, chacun des bits de masquage dudit second tableau (52) étant associé à un mot dudit premier tableau (51) de bits de masquage, chaque bit de masquage dudit second tableau (52) étant non significatif par défaut, et étant spécifiquement initialisé lorsqu'au moins un des bits de masquage est significatif dans le mot associé dudit premier tableau (51) de bits de masquage.

15. Le procédé selon la revendication 14, dans lequel lesdits premier (51) et/ou second (52) tableaux de bits de masquage sont stockés dans un espace mémoire distinct desdits espaces mémoires contenant des ensembles de tables de verrous (41), copies de verrous (50) respectivement, et sont accessibles parallèlement auxdits espaces mémoires contenant les ensembles de tables d'objets (13) ou de versions d'objets (30).

16. Le procédé selon la revendication 10, dans lequel:
     - on mémorise, pour chaque fichier, les transactions qui ont verrouillé ou sont en attente par suite d'au moins un verrou posé sur au moins un objet dudit fichier par une autre transaction ;

- on détermine, de façon classique, la possibilité d'un interblocage au niveau du fichier, par exemple en construisant un graphe d'attente des transactions ;
- on vérifie, pour chaque transaction susceptible d'avoir un verrou en lecture sur lesdits fichiers bloquant une autre transaction en attente, si ce conflit est effectif, en explorant si l'intersection est non nulle entre le fichier résultat de l'opération où ont été posés les verrous par ladite transaction verrouillante, et les identifiants des objets sur lesquels ladite autre transaction est en attente.

17. Le procédé selon la revendication 11, dans le but de gérer la relance d'une transaction sur laquelle on a constaté un conflit d'accès à un objet, au cours d'une demande de pose de verrous en écriture sur ledit objet par une opération de la séquence d'opérations définissant ladite transaction, dans lequel on calcule un critère de relance de ladite transaction égale à la différence entre la valeur du champ compteur de verrous associé audit objet et la valeur dudit résultat de décrémentation contenu dans le champ compteur de la copie des champs de verrouillage associée à ladite opération en attente,
   et on place sélectivement ladite transaction dans l'un des cas suivants :
   - on met en attente simple ladite transaction lorsque ledit critère de relance est égal à zéro, c'est-à-dire lorsque ladite transaction n'a pas posé de verrou en lecture sur ledit objet ;
   - on met en attente prioritaire, ladite transaction lorsque ledit critère de relance est non nul, c'est-à-dire lorsque ladite transaction a posé au moins un verrou en lecture sur ledit objet ;
   - on constate un interblocage sur ledit objet lorsque il existe déjà une transaction antérieure mise en attente prioritaire sur ledit objet et que la transaction en cours est en condition d'attente prioritaire, et on abandonne l'une desdites transactions antérieures et courantes.

18. Le procédé selon la revendication 17, dans le but d'effectuer une étape de relance d'une transaction mise en attente simple ou en attente prioritaire, dans lequel:
   - on mémorise, dans un tableau d'attente, une référence de la liste des transactions en attente sur ledit objet,
   - on range l'indice de cette référence dudit tableau d'attente dans le champ à estampille du verrou associé audit objet, et on incrémente dans le descripteur de chacune desdites transactions en attente, un nombre d'objets sur lesquels elle est en attente dans un compteur d'objets bloquants,
   - on décrémente d'une unité ledit compteur d'objets bloquant du descripteur de la transaction mise en attente prioritaire sur ledit objet, lorsque la valeur contenue dans le champ compteur de verrous associés audit objet atteint un seuil égal à la valeur dudit critère de relance, c'est-à-dire lors du déverrouillage complet dudit objet par les autres transactions, et on retire ladite transaction de la liste des transactions en attente sur ledit objet,
   - on décrémente d'une unité ledit compteur d'objet bloquant du descripteur de chaque transaction mise en attente simple sur un objet lorsque la valeur du champ compteur associé audit objet est égal à zéro, c'est-à-dire lors du déverrouillage complet dudit objet, et on retire ladite transaction de la liste des transactions en attente sur ledit objet,
   - on relance toute transaction dont le compteur d'objets bloquants est revenu à zéro.

19. Le procédé selon la revendication 8, dans le but d'effectuer l'exploration de l'intersection entre deux fichiers résultats d'une opération, représentées par des ensembles identifiants d'objets, dans lequel:
   - on positionne à une valeur donnée les bits de masquage associés aux copies de verrous de chaque objet, pour les objets dont les identifiants font partie de l'une des relations résultats,
   - on teste lesdits bits de masquage pour chaque identifiant de l'autre relation,
   - on établit que ladite intersection est non nulle dès la rencontre du premier bit de masquage correspondant à l'existence d'un objet dudit autre fichier résultat.

20. Le procédé selon la revendication 3, dans lequel:
   - une opération est divisée en une ou plusieurs sous-opérations indépendantes ;
   - une sous-opération d'une transaction est effectuée sans être interrompue par une sous-opération d'une autre transaction ;
   - on recherche les conflits certains dues à un verrou exclusif d'une autre transaction en cours de sous-opération et les conflits possibles dûs à un champ compteur non nul en fin de sous-opération,
   - en cas de conflit sur certains objets la sous-opération se trouve partiellement abandonnée sur ces objets du seul fait que deux adresses logiques ne sont conservées que dans la relation temporaire de mémorisation des conflits de la sous-opération et qu'ils ne font pas l'objet de verrous ;
- la transaction est alors mise en attente par simple retrait de la liste des transactions en cours d'exécution.

## Claims

1. A procedure for managing conflict of requests for access to objects disposed in a source file by different transactions, each object comprising operations calling up at least one access to the same object stored in the memory units of a computer, the said objects being addressed by means of a memory access management unit comprising indirect addressing means (18,19) for providing an object physical addressing message in response to a source logic address (10) originating from a processing unit of the computer and blocking means comprising at least one access blockage table (41) formed from records, each record of the said access blockage tables containing a blocking message field and being accessible via addressing means associated with an object or a group of objects, in which procedure:
   - all the blocking message fields associated with the accessed objects are initialised in the source file;
   - each object's blocking message field is incremented for each request for access to the said object originating from any transaction whatsoever;
   - the number of accesses to each object which have been requested for each transaction is stored in a result file;
   - at the end of each current transaction, the blocking message for each object is decremented in the source file, for each object accessed by the said transaction, by the value of the blocking message corresponding to the said object in the result file;
        the said procedure comprising in addition the following stages:
   - the said blocking fields of the said source file are systematically duplicated in an identical copy of the said fields (50, 60);
   - on each occurrence of a conflict in reading or writing an object by at least two different transactions, the number stored in the result file for access to the said object for the current transaction is subtracted from the blocking message for the object to which access is requested in the said copy of the said blocking fields;
   - a conflict is verified and the said current transaction is placed on hold when the result of the subtraction operation differs from zero, i.e. when at least one other transaction which has not yet been completed has obtained access to the said object.

2. The procedure according to claim 1, wherein a blocking status field containing a specific blocking message for each object of the group of objects associated with the record is placed in each of the said records containing a blocking message, the said specific blocking messages being placed consecutively within the said blocking status field.

3. The procedure according to claims 1 or 2, wherein at least one blockage placement counter sub-field, and/or a transaction marker sub-field, and/or one famine bit is placed in each specific object blocking message.

4. The procedure according to claim 3, wherein each of the said source logic addresses originating from the processing unit is formed by at least two distinct fields each containing an indirect address, each field corresponding to an indirect addressing of a different level, and wherein the tables of blockages are disposed within at least two groups of hierarchically organised tables, each of the said groups of tables of blockages corresponding to one of the said indirect addressing levels of the source logic address, and wherein record selection means are associated with each group of tables of blockages, the said selection means receiving as their input, on the one hand the indirect address contained in the corresponding field of the source logic address, and on the other hand optionally a secondary addressing message originating from a group of tables of a higher level, and providing as their output the selected address for accessing a record of the said group of associated tables.

5. The procedure according to claim 4, wherein the said hierarchically organised groups of tables of blockages cooperate with the said hierarchically organised groups of object addressing tables, and wherein the said hierarchies of tables of blockages and tables of objects are accessed from the same

22

source logic address.

6. The procedure according to claim 5, wherein the said hierarchies of object addressing and tables of blockages are incorporated, at least on each level, in common memory spaces.

7. The procedure according to claim 6, wherein one of the following address conversion phases is effected alternately from values contained in the source logic address fields and from a blocking logic address originating from one of the tables from the hierarchy of object addressing tables:
   - conversion of the input logic address into an object physical address,
   - conversion of the blocking logic address into a blocking message and/or a physical address for the said blocking message.

8. The procedure according to claim 1, wherein the said groups of tables of blockages cooperate with tables of masking bits for the words of each group of blocking messages, the said tables being stored in memory spaces accessed in parallel with the memory spaces containing the said groups of tables of blockages.

9. The procedure according to claim 8, wherein the said masking bits correspond to a message stating whether or not a specific blocking message exists in the locked state for the object or group of objects concerned.

10. The procedure according to claim 8, wherein the said tables of masking bits are organised into a hierarchy of tables on at least two levels.

11. The procedure according to claim 3, wherein each first transaction accessing an object places a transaction label in the transaction marker field of the specific blocking message for the said object,
   the said marker being deleted in the event of a request for access to the said object by a second transaction distinct from the first transaction.

12. The procedure according to claim 11, wherein, for a write-in blocking request formulated by an operation of a transaction T1, or a version of objects to which a read-out block has been applied:
   - the famine bit of the specific blocking message for the said object is optionally positioned in such a way as to prevent a subsequent read-out operation from accessing the said object,
   - the said object or its identifier is stored in a temporary possible conflict relationship associated with the said transaction,
   - at the end of the said operation, a copy is made of the counter field for the specific blocking message for each of the said objects stored in the said temporary conflict relationship,
   - the said counter copies are decremented by the number of occurrences of the said corresponding objects in the result file or results files associated with the said transaction,
   - a conflict is verified and the effects of the said operation are cancelled and it is placed on hold, at least for the said objects in conflict of access, when the result of the decrementation differs from zero, i.e. when at least one other transaction which has not yet been completed has obtained access to the said object;
   - the absence of conflict is verified when the result of the decrementation is equal to zero.

13. The procedure according to claim 11, wherein the tables of blockages (41, 42) and the copies of the tables of blockages (50, 60), respectively, which contain the said specific blocking messages for the said objects or versions of objects, cooperate with a first array (51, 61) of masking bits for the words of each page of blockages and a copy of the page of blockages, respectively, the default state of each of the said bits being non-significant, and each bit being specifically initialised when the corresponding word contains at least one significant blockage.

14. The procedure according to claim 13, wherein the said tables of blockages (41, 42) and copies of tables of blockages, respectively, which contain the said specific blocking messages for the said objects, or versions of objects, cooperate with a second array (52) of masking bits, each masking bit of the said second array (52) being associated with one word of the said first array (51) of masking bits, the default state of each masking bit of the said second array (52) being non-significant, and each bit being specifically initialised when at least one of the masking bits is significant in the associated word of the said first array (51) of masking bits.

15. The procedure according to claim 14, wherein the said first (51) and/or second (52) arrays of masking bits are stored in a memory space distinct from the said memory spaces containing groups of tables of blockages (41) and copies of tables of blockages (50), respectively, and are accessible in parallel to the said memory spaces containing the groups of tables of objects (13) or of versions of objects (30).

16. The procedure according to claim 10, wherein:
- for each file, the transactions which are blocked, or which are on hold as a consequence of at least one blockage applied to at least one object of the said file by another transaction, are stored in memory;
- the possibility of cross-blocking at file level is determined in a classical manner, for example by constructing a transaction wait graph;
- for each transaction likely to have a read-out block on the said files blocking another transaction on hold, it is verified whether this conflict is effective by exploring whether the AND function is not void between the result file from the operation where the blocks have been applied by the said blocking transaction, and the identifiers of the objects with respect to which the said other transaction is on hold.

17. The procedure according to claim 11, with the object of managing the reactivation of a transaction on which a conflict of access to an object has been verified during a request for write-in blockages to be applied to the said object by an operation from the sequence of operations defining the said transaction, wherein a reactivation criterion is calculated for the said transaction, equal to the difference between the value of the blockage counter field associated with the said object and the value of the said decrementation result contained in the counter field of the copy of the blocking fields associated with the said operation on hold,
   and the said transaction is placed selectively in one of the following cases:
- the said transaction is placed on standard hold when the reactivation criterion is equal to zero, i.e. when the said transaction has not placed a read-out lock on the said object;
- the said transaction is placed on priority hold when the said reactivation criterion is not zero, i.e. when the said transaction has applied at least one read-out blockage to the said object;
- cross-blocking is verified for the said object when a preceding transaction already exists which has been placed on priority hold with respect to the said object and when the current transaction is in a priority hold condition, and one of the said preceding or current transactions is abandoned.

18. The procedure according to claim 17, with the object of effecting a reactivation stage for a transaction placed on standard hold or priority hold, wherein:
- a reference to the said object from the list of transactions on hold is stored in a holding array,
- the index of this reference from the said holding array is stored in the marker field of the blockage associated with the said object, and a number of objects in respect of which the said transaction is on hold in a blocking object counter is incremented in the descriptor of each of the said transactions on hold,
- the said blocking object counter of the descriptor of the transaction placed on priority hold with respect to the said object is decremented by one unit when the value contained in the blockage counter field associated with the said object reaches a threshold equal to the value of the said reactivation criterion, i.e. on the complete unblocking of the said object by the other transactions, and the said transaction is withdrawn from the list of transactions on hold with respect to the said object,
- the said blocking object counter of the descriptor of each transaction placed on standard hold with respect to an object is decremented by one unit when the value of the counter field associated with the said object is equal to zero, i.e. on the complete unblocking of the said object, and the said transaction is withdrawn from the list of transactions on hold with respect to the said object,
- any transaction for which the blocking object counter has returned to zero is reactivated.

19. The procedure according to claim 8, with the object of effecting an exploration of the AND function between two results files of an operation, represented by object identifier groups, wherein:

- the masking bits associated with the copies of the blockages for each object are positioned at a given value for objects of which the identifiers form part of one of the result relationships,
- the said masking bits are tested for each identifier of the other relationship,
- it is established that the said AND function is not void when the first masking bit is encountered which corresponds to the existence of an object of the said other result file.

20. The procedure according to claim 3, wherein:
- an operation is divided into one or more independent subsidiary operations;
- a subsidiary operation of a transaction is effected without being interrupted by a subsidiary operation of another transaction;
- a search is made for certain conflicts due to an exclusive blockage on another transaction during a subsidiary operation and for possible conflicts due to a counter field which is not zero at the end of the subsidiary operation,
- in the event of conflict with respect to certain objects, the subsidiary operation is partially abandoned with respect to these objects, simply due to the fact that two logic addresses are only retained within the temporary relationship for storing conflicts for the said subsidiary operation and that they are not subject to blockages;
- the transaction is then placed on hold by straightforward withdrawal from the list of transactions currently being executed.

**Patentansprüche**

1. Verfahren zur Konfliktverwaltung von Zugriffsbefehlen zu in einer Quelldatei abgelegten Objekten durch unterschiedliche Transaktionen, von denen jede Operationen enthält, die mindestens einen Zugriff zu einem gleichen Objekt, das in den Speichereinheiten eines Rechners gespeichert ist, aufrufen, wobei die Objekte über eine Speicherzugriffsverwaltungseinheit adressiert werden, die indirekte Adressiermittel (18, 19) zur Lieferung einer Information zur physikalischen Adressierung von Objekten aufgrund einer logischen Quelladresse (10), die von einer Verarbeitungseinheit des Rechners stammt, und Sperrmittel aufweist, mit mindestens einer aus Aufzeichnungen bestehenden Tabelle (41) von Zugriffssperren, wobei jede Aufzeichnung der Tabellen (41) von Zugriffssperren ein Feld von Sperrinformationen darstellt und über die Adressiermittel, die einem Objekt oder einer Objektgruppe zugeordnet sind, zugänglich ist, mit folgenden Verfahrensschritten :
- In der Quelldatei werden alle Felder von Sperrinformationen, die den zugegriffenen Objekten zugeordnet sind, initialisiert;
- das Feld von Sperrinformationen jedes Objektes wird bei jedem, von einer beliebigen Transaktion stammenden Zugriffsbefehl zu diesem Objekt inkrementiert;
- in einer Ergebnisdatei wird für jede Transaktion die Zahl der von ihr angeforderten Zugriffe zu jedem Objekt gespeichert;
- an jedem Ende einer ablaufenden Transaktion wird in der Quelldatei für jedes von der Transaktion zugegriffene Objekt die Sperrinformation jedes Objektes von dem Wert der diesem Objekt entsprechenden Sperrinformation in der Ergebnisdatei dekrementiert;
und mit folgenden zusätzlichen Verfahrensschritten:
- die Sperrfelder der Quelldatei werden systematisch zu einer identischen Kopie dieser Felder (50, 60) dupliziert;
- bei jedem Auftreten eines Konflikts des Lesens oder Schreibens eines Objektes durch mindestens zwei verschiedene Transaktionen wird von der Sperrinformation des vom Zugriffbefehl betroffenen Objektes in der Kopie der Sperrfelder die Zahl subtrahiert, die in der Ergebnisdatei für den Zugang zu diesem Objekt für die laufende Transaktion gespeichert ist;
- ein Konflikt wird festgestellt und die laufende Transaktion angehalten, wenn das Ergebnis des Subtraktionsvorgangs von Null verschieden ist, d.h. wenn mindestens eine andere, noch nicht abgeschlossene Transaktion Zugriff zu dem Objekt bekommen hat.

2. Verfahren nach Anspruch 1 , bei dem in jeder der eine Sperrinformation enthaltenden Aufzeichnungen ein Sperrzustandsfeld eingesetzt wird, welches eine spezifische Sperrinformation für jedes Objekt der der Aufzeichnung zugeordneten Objektgruppe enthält, wobei diese spezifischen Sperrinformationen nacheinander in das Innere des Sperrzustandsfeldes eingesetzt werden.

25

**3.** Verfahren nach Anspruch 1 oder 2 , bei dem in jede spezifische Sperrinformation des Objektes mindestens ein Unterfeld zum Zählen der Sperrensetzungen und/oder ein Unterfeld zum Markieren der Transaktion und/oder ein Hunger-Bit eingesetzt wird.

**4.** Verfahren nach Anspruch 3 , bei dem jede der von der Verarbeitungseinheit stammenden logischen Quelladressen aus mindestens zwei unterschiedlichen Feldern besteht, von denen jedes eine indirekte Adresse enthält, wobei jedes Feld einer indirekten Adressierung auf verschiedenem Niveau entspricht, und bei dem die Sperrtabellen in mindestens zwei hierarchisch organisierten Tabellengruppen angeordnet werden, wobei jede dieser Gruppen von Sperrentabellen einem der Niveaus der indirekten Adressierung der logischen Quelladresse entspricht, und bei dem jeder Gruppe von Sperrentabellen Mittel zur Auswahl einer Aufzeichnung zugeordnet werden, wobei diese Auswahlmittel als Eingang einerseits die indirekte Adresse, die in dem der logischen Quelladresse entsprechenden Feld enthalten ist, und andererseits gegebenenfalls eine Sekundäradresseninformation aus der Tabellengruppe des höheren Niveaus empfängt und als Ausgang die ausgewählte Adresse für den Zugriff zu einer Aufzeichnung der Gruppe von zugeordneten Tabellen liefert.

**5.** Verfahren nach Anspruch 4 , bei dem die hierarchisierten Gruppen von Sperrentabellen mit den hierarchisierten Gruppen von Objektadressentabellen zusammenwirken und bei dem der Zugriff zu den Hierarchien der Sperrentabellen und der Objekttabellen aufgrund der gleichen logischen Quelladresse erfolgt.

**6.** Verfahren nach Anspruch 5 , bei dem die Hierarchien der Objektadressentabellen und der Sperrentabellen mindestens für jedes Niveau in gemeinsamen Speicherbereichen integriert sind.

**7.** Verfahren nach Anspruch 6 , bei dem man abwechselnd eine der folgenden Phasen der Adressenübersetzung durchführt, ausgehend von den in den Feldern der logischen Quelladresse enthaltenen Werten und von einer logischen Sperradresse, die aus einer der Tabellen der Hierarchie der Objektadressentabellen stammt:
- Übersetzung der logischen Eingangsadresse in eine physikalische Objektadresse,
- Übersetzung der logischen Sperradresse in eine Sperrinformation und/oder eine physikalische Adresse der Sperrinformation.

**8.** Verfahren nach Anspruch 1 , bei dem die Gruppen von Sperrentabellen mit Bittabellen zum Maskieren der Wörter jeder Gruppe von Sperrinformationen zusammenarbeiten, wobei diese Tabellen in Speicherbereichen gespeichert sind, die parallel zu den die Gruppen von Sperrentabellen enthaltenden Speicherbereichen zugegriffen werden.

**9.** Verfahren nach Anspruch 8 , bei dem die Maskierungsbits einer Information über das Vorhandensein oder Fehlen einer speziellen Sperrinformation im Sperrzustand, für das jeweils betrachtete Objekt oder die Objektgruppe, entsprechen.

**10.** Verfahren nach Anspruch 8 , bei dem die Tabellen von Maskierungsbits in einer Tabellenhierarchie auf mindestens zwei Ebenen organisiert sind.

**11.** Verfahren nach Anspruch 3 , bei dem jeweils die erste auf ein Objekt zugreifende Transaktion ein Transaktionsflag in dem Transaktionsmarkierungsfeld der speziellen Sperrinformation des Objektes setzt,
wobei diese Markierung im Falle eines Zugriffsbefehls für dieses Objekt durch eine zweite, von der ersten verschiedene Transaktion gelöscht wird.

**12.** Verfahren nach Anspruch 11 , bei dem für einen durch Ausführung einer Transaktion (T1) formulierten Schreibsperrenbefehl auf ein lesegesperrtes Objekt, oder eine Übersetzung von lesegesperrten Objekten
- das Hunger-Bit der speziellen Sperrinformation dieses Objektes, falls vorhanden, gesetzt wird, um den Zugriff einer späteren Lesetransaktion zu diesem Objekt zu vermeiden,
- dieses Objekt, oder seine Identifizierung, in einer temporären Relation für möglichen Konflikt in Zuordnung zu dieser Transaktion gespeichert wird,

- am Ende dieser Operation das Zählerfeld der speziellen Sperrinformation jeder dieser in der vorübergehenden Konfliktrelation gespeicherten Objekte wieder kopiert wird,
- diese Zählerkopien von der Anzahl des Auftretens der entsprechenden Objekte in der oder den der Transaktion zugeordnete(n) Ergebnisdatei(en) dekrementiert werden,
- ein Konflikt festgestellt und der Effekt dieser Operation mindestens für die vom Zugriffskonflikt betroffenen Objekte annulliert und diese in Wartezustand gesetzt wird, wenn das Resultat der Dekrementierung von Null verschieden ist, d.h. wenn mindestens eine weitere, noch nicht abgeschlossene Transaktion Zugriff zu dem Objekt erhalten hat,
- und die Abwesenheit eines Konflikts festgestellt wird, wenn das Ergebnis der Dekrementierung gleich Null ist.

13. Verfahren nach Anspruch 11 , bei dem die Sperrentabellen (41, 42), bzw. Kopien von Sperrentabellen (50, 60), die die speziellen Sperrinformationen der Objekte oder Objektübersetzungen enthalten, mit einer ersten Tabelle (51, 61) von Bits zur Maskierung der Wörter jeder Seite von Sperren bzw. Kopie der Seite von Sperren zusammenwirken, wobei jedes dieser Bits nicht fehlersignifikativ ist und speziell initialisiert wird, wenn das entsprechende Wort mindestens eine signifikative Sperre enthält.

14. Verfahren nach Anspruch 13 , bei dem die Sperrentabellen (41, 42) bzw. Kopien von Sperrentabellen (50, 60), die die speziellen Sperrinformationen der Objekte oder Objektübersetzungen enthalten, mit einer zweiten Tabelle (52) von Maskierungsbits zusammenwirken, wobei jedes Maskierungsbit der zweiten Tabelle (52) einem Wort der ersten Tabelle von Maskierungsbits zugeordnet ist und jedes Maskierungsbit der zweiten Tabelle (52) nicht fehlersignifikativ ist und speziell initialisiert wird, wenn mindestens eines der Maskierungsbits in dem zugeordneten Wort der ersten Tabelle (51) von Maskierungsbits signifikativ ist.

15. Verfahren nach Anspruch 14 , bei dem die erste (51) und/oder zweite (52) Maskierungsbittabelle in einem Speicherbereich, der von den die Tabellengruppen von Sperren (41) bzw. Sperrenkopien (50) enthaltenden Speicherbereichen verschieden ist, gespeichert und parallel zu den die Tabellengruppen der Objekte (13) oder Objektübersetzungen (30) enthaltenden Speicherbereichen zugreifbar sind.

16. Verfahren nach Anspruch 10 , bei dem:
- für jede Datei die Transaktionen gespeichert werden, die gesperrt oder in Wartezustand versetzt sind durch mindestens eine Sperre, die auf mindestens ein Objekt der Datei durch eine andere Transaktion gesetzt wurde;
- in üblicher Weise die Möglichkeit einer gegenseitigen Blockierung auf der Ebene der Datei festgestellt wird, z.B. durch Konstruktion eines Wartegraphen der Transaktionen;
- für jede Transaktion, die eine Lesesperre für die Dateien zur Blockierung einer anderen, in Wartezustand befindlichen Transaktion aufweisen kann, festgestellt wird, ob der Konflikt wirksam ist, indem ermittelt wird, ob die Schnittmenge zwischen der Ergebnisdatei der Operation, in der die Sperren durch die Sperren der Transaktion gesetzt worden sind, und den Identifikationen der Objekte, für die die andere Transaktion im Wartezustand ist, von Null verschieden ist.

17. Verfahren nach Anspruch 11 für das Erzeugen der Freigabe einer Transaktion, für die ein Zugriffskonflikt zu einem Objekt festgestellt wurde, im Verlauf eines Befehls der Schreibsperrensetzung auf das Objekt durch eine Operation der diese Transaktion definierenden Operationensequenz, bei der ein Freigabekriterium für die Transaktion berechnet wird, welches gleich ist der Differenz zwischen dem Wert des diesem Objekt zugeordneten Sperrenzählerfeldes und dem Wert des Subtraktionsergebnisses, das in dem Zählerfeld der der im Wartezustand befindlichen Operation zugeordneten Kopie der Sperrenfelder enthalten ist, und bei dem die Transaktion wahlweise in einen der folgenden Zustände gebracht wird:
- Die Transaktion wird in einen einfachen Wartezustand gebracht, wenn das Freigabekriterium gleich Null ist, d.h. wenn die Transaktion keine Lesesperre auf das Objekt gesetzt hat;
- die Transaktion wird in einen vorrangigen Wartezustand versetzt, wenn das Freigabekriterium von Null verschieden ist, d.h. wenn die Transaktion mindestens eine Lesesperre auf das Objekt gesetzt hat;
- man stellt eine gegenseitige Blockierung an dem Objekt fest, wenn bereits eine frühere, in den vorrangigen Wartezustand versetzte Transaktion an dem Objekt existiert und die laufende Transaktion im vorrangigen Wartezustand ist, und es wird eine dieser früheren bzw. laufenden Transaktionen aufgegeben.

**18.** Verfahren nach Anspruch 17 zum Bewirken eines Freigabeschrittes einer in den einfachen Wartezustand oder vorrangigen Wartezustand versetzten Transaktion, bei dem

- in einer Wartetabelle eine Referenz der Liste der im Wartezustand befindlichen Transaktionen für das Objekt gespeichert wird,
- der Index dieser Referenz der Wartetabelle in dem Markierungsfeld der diesem Objekt zugeordneten Sperre eingeordnet wird und in dem Deskriptor jeder dieser im Wartezustand befindlichen Transaktionen eine Anzahl von Objekten, für die sie sich im Wartezustand befindet, in einem Zähler der blockierten Objekte inkrementiert wird,
- der Zähler der blockierten Objekte des Deskriptors der in den vorrangigen Wartezustand versetzten Transaktion für dieses Objekt wird um eine Einheit vermindert, wenn der in dem Zählerfeld der dem Objekt zugeordneten Sperren enthaltene Wert einen Schwellenwert erreicht, der gleich dem Wert des Freigabekriteriums ist, d.h. bei der vollständigen Entsperrung des Objektes durch die anderen Transaktionen, und diese Transaktion wird aus der Liste der im Wartezustand befindlichen Transaktionen für dieses Objekt gelöscht,
- der Zähler der blockierten Objekte des Deskriptors jeder in den einfachen Wartezustand versetzten Transaktion für ein Objekt wird um eine Einheit vermindert, wenn der Wert des diesem Objekt zugeordneten Zählerfeldes gleich Null ist, d.h. bei der vollständigen Entsperrung des Objektes, und diese Transaktion wird aus der Liste der im Wartezustand befindlichen Transaktionen für dieses Objekt gelöscht,
- und jede Transaktion, deren Zähler der blockierten Objekte auf Null zurückgekehrt ist, wird freigegeben.

**19.** Verfahren nach Anspruch 8 für die Ermittlung der Schnittmenge zwischen zwei Ergebnisdateien einer Operation, die durch Sätze von Objektidentifikatoren repräsentiert werden, bei dem:

- die den Sperrenkopien jedes Objektes zugeordneten Maskierungsbits auf einen gegebenen Wert gesetzt werden, und zwar für die Objekte, deren Identifikatoren Bestandteil einer der Ergebnisrelationen sind;
- die Maskierungsbits für jeden Identifikator einer anderen Relation geprüft werden;
- festgestellt wird, daß die Schnittmenge von Null verschieden ist beim Auftreten des ersten Maskierungsbits, das dem Vorhandensein eines Objektes der anderen Ergebnisdatei entspricht.

**20.** Verfahren nach Anspruch 3 , bei dem :

- eine Operation in eine oder mehrere unabhängige Sub-Operationen unterteilt wird;
- eine Sub-Operation einer Transaktion ohne Unterbrechung durch eine Sub-Operation einer anderen Transaktion ausgeführt wird;
- die sicheren Konflikte, die auf einer exklusiven Sperre einer anderen Transaktion im Verlauf der Sub-Operation beruhen, und die möglichen Konflikte, die auf einem von Null verschiedenen Zählerfeld am Ende der Sub-Operation beruhen, aufgesucht werden;
- im Falle eines Konfliktes bei bestimmten Objekten die Sub-Operation teilweise für diese Objekte aufgegeben wird aufgrund der Tatsache, daß zwei logische Adressen nur in der temporären Relation der Konfliktspeicherung der Sub-Operation gespeichert werden und nicht mit Sperren belegt sind;
- die Transaktion dann durch einfaches Löschen von der Liste der in Exekution befindlichen Transaktionen in den Wartezustand versetzt wird.

28

FIG.1

FIG. 2

FIG.3a

FIG.3b

FIG.3c

**18**

**( 10 )**

OID logique ==+==>     TPAQL        TPAGL        TOBJL

**17**

OID physique

**11**        **12**        **13**

OID physique ==+==>     TPAQP        TPAGP        DONNEES

**14**        **15**        **16**

**19**

## FIG. 4

## FIG. 5

TPAGL   **12**

TOBJ   **13**

T VERROU

VERROU
VERSIONS

T VERS

| nb éléments |
| tête de liste |
| version 0 |
| label | oid ph. |

**43**

**41**

**42**

un tuple
verrou
(T VERROU VERSION)

**30**

FIG.6

TPAGL 12

TCOP-VER

| 000........10100 | Super Existe 52 |
| 000............. | |
| ............001 | Existe 51 |

T VERROU 41

copie valeur verrou — 50

TOBJ 13

FIG.7

| TOBJ | T VERROU | TCOP VERROU | |
|---|---|---|---|
| 13 | 41  0...010...0 | 50  0...010...0 | Super-Existe 52 |
| J | 0...010...0 | 0...010...0 | Texiste 51 |
| | J | | Valeur Copie Verrou |

| T VERSIONS | T VERROU-VERSION | TCOP VERROU-VERS | |
|---|---|---|---|
| 30  Entête | 42  Texiste | 60  Texiste | 61 |
| OID Physique | Valeur-Verrou | Valeur-Verrou | |

# FIG. 8

R : registre
CPTR : compteur
A : odditionneur
T : circuit de test
◇ : orrêt de bus

FIG. 9